# EUROPEAN PATENT SPECIFICATION

(11) **EP 4 158 542 B1**
(45) Date of publication and mention of the grant of the patent: **19.11.2025**
(21) Application number: 21812888.2
(22) Date of filing: 25.05.2021
(51) Int. Cl.: G06K 19/06, G06K 19/067, H01Q 15/00

(54) **PASSIVE IDENTIFICATION TAGS INCLUDING RESONANT STRUCTURES AND CHARACTERISTIC LAYERS**
PASSIVE IDENTIFIKATIONSETIKETTEN MIT RESONANZSTRUKTUREN UND CHARAKTERISTISCHEN SCHICHTEN
ÉTIQUETTES D'IDENTIFICATION PASSIVES COMPRENANT DES STRUCTURES RÉSONANTES ET DES COUCHES CARACTÉRISTIQUES

(30) Priority: 26.05.2020 US 202063029810 P
(43) Date of publication of application: 05.04.2023
(73) Proprietor: Pascal Tags Inc., Louisville, Kentucky 40223 (US); Young, Brandon, Thomas, Louisville, KY 40207 (US); Rotzoll, Robert, Rudolph, Cascade, CO 80809 (US)
(72) Inventor: YOUNG, Brandon, Thomas, Louisville, KY 40207 (US); ROTZOLL, Robert, Rudolph, Cascade, CO 80809 (US)
(74) Representative: SSM Sandmair
(86) International application number: PCT/US2021/034053
(87) International publication number: WO 2021/242754

(56) References cited:
- WO-A1-2019/178068
- US-A1- 2008 012 579
- US-A1- 2014 021 263
- US-A1- 2014 203 914
- US-A1- 2015 199 602
- US-B1- 8 736 452
- US-B1- 9 640 855
- US-B2- 8 743 006

## Description

### BACKGROUND

### Field

The present specification generally relates to passive identification tags for identifying objects using energy from a detection signal.

### Technical Background

Existing inventory tags typically fall under an active category or a passive category. Active tag elements (e.g., including radio frequency identification ("RFID") electronics and sensors) may provide a wealth of information but do so at increased expense and complexity. Additionally, the incorporation of electrical components (e.g., sensors, batteries, or the like) into active tag elements make them difficult to incorporate directly into products. Passive tag elements are cost effective and may be directly applied to products, but do not provide the same amount of information that active tag elements do. In view of this, a structure for a passive identification tag that is capable of providing a structurally-sensitive response to facilitate identification thereof in an inventory setting would be beneficial. US 9,640,855 suggests a chipless RFID transponder comprising an antenna and a plurality of resonant structures that together define a spectral signature of the RFID transponder. US 8,743,006 suggests a wireless communication-improving sheet member for increasing a possible communication distance of an IC tag for wireless communication, a wireless IC tag, an antenna, and a wireless communication system.

### SUMMARY

A first aspect of the present disclosure includes a passive identification tag as set out in appended independent claim 1.

A second aspect of the present disclosure includes a passive identification tag according to the first aspect, wherein the resonant structure is formed of a dielectric material, a conductive material, or a combination thereof.

A third aspect of the present disclosure includes a passive identification tag according to any of the first through the second aspects, wherein a dielectric constant or conductivity of the resonant structure determines the baseline response.

A fourth aspect of the present disclosure includes a passive identification tag according to any of the first through the third aspects, wherein the resonant structure comprises a pattern of conductive material disposed on the non-conductive substrate.

A fifth aspect of the present disclosure includes a passive identification tag according to any of the first through the fourth aspects, wherein the characteristic layer is formed of a dielectric material, a conductive material, or a combination of dielectric and conductive materials.

In any of the first through the fifth aspects, the characteristic layer may comprise a dielectric structure having a geometry that is structured to manipulate the baseline response.

A sixth aspect of the present disclosure includes a passive identification tag according to any of the first through the fifth aspects, wherein the geometry forms at least one of a portion of a circle, a square, a dot, a teardrop, and a triangle section of dielectric material.

An seventh aspect of the present disclosure includes a passive identification tag according to any of the first through the sixth aspects, wherein the dielectric structure manipulates the baseline response by at least one of detuning the baseline response, coupling the baseline response, and absorbing the baseline response.

A eighth aspect of the present disclosure includes a passive identification tag according to any of the first through the seventh aspects, wherein the dielectric structure comprises a pattern of dielectric material that varies along three dimensions.

An ninth aspect of the present disclosure includes a passive identification tag according to any of the first through the eighth aspects, wherein the protective structure comprises a layer of dielectric material that encapsulates the resonant structure and the characteristic layer and is configured to prevent one or more of oxidation, corrosion, and wear of the resonant structure and characteristic layer.

A tenth aspect of the present disclosure includes a passive identification tag according to any of the first through the ninth aspects, wherein the protective structure prevents the changes in material properties of the resonant structure and the characteristic layer when the passive identification tag is exposed to contaminants from outside exposure.

The contaminants may comprise one or more or more of mechanical contact, light, ultraviolet radiation, and a laser.

A eleventh aspect of the present disclosure includes a passive identification tag according to any of the first through the tenth aspects, wherein the passive identification tag is planar in shape.

A twelfth aspect of the present disclosure includes a passive identification tag according to any of the first through the eleventh aspects, wherein the passive identification tag is non-planar in shape in order to facilitate interrogation by a transmitter from a variety of locations.

The passive identification tag according to any of the first through the twelfth aspects may further comprise a reference resonant structure generating a reference response from the detection signal that is used to normalize the tag response.

A thirteenth aspect of the present disclosure includes a passive identification tag according to any of the first through the twelfth aspects, wherein the resonant structure comprises a sensor portion for attachment of an external sensor to the resonant structure.

An fouteenth aspect of the present disclosure includes a passive identification tag according to any of the first through the thirteenth aspects, wherein the resonant structure comprises a plurality of resonant structures that do not contact one another.

A fifteenth aspect of the present disclosure includes a passive identification tag according to any of the first through the fourteenth aspects, wherein the resonant structure comprises a plurality of sensor portions connected to each of the plurality of resonant structures for attachment of one or more external sensors to the passive identification tag.

The passive identification tag according to any of the first through the nineteenth aspects may further comprise a visual cue containing information identifying the passive identification tag.

Further, the visual cue may comprise a machine-readable code.

Still further, the visual cue may be integrated into one or more of the non-conductive substrate, the resonant layer, the characteristic layer, and a protection structure of the passive identification tag.

A sixteenth aspect of the present disclosure includes a passive identification tag according to any of the first through the fifteenth aspects, further comprising a patch antenna disposed on the non-conductive substrate, the patch antenna configured to generate a secondary detection signal from the detection signal that is used to generate the baseline response.

A seventeenth aspect of the present disclosure which does not form part of the claimed invention includes an identification system including a transmitter configured to generate a detection signal and a first passive identification tag disposed on a first object. The first passive identification tag includes a resonant structure configured to generate a baseline response from the detection signal and a dielectric structure disposed adjacent the resonant structure configured to modify the baseline response such that the first passive identification tag transmits a first tag response in response to the detection signal. The identification system includes a detector configured to generate an analog identification signal for the first passive identification tag from the first tag response, the identification signal comprising an amplitude component, a phase component, a group delay component, and a phase delay component.

A eighteenth aspect of the present disclosure which does not form part of the claimed invention includes an identification system according to the seventeenth aspect, wherein the detector comprises detection logic comprising a set of equations or a response library that causes the detector to generate a reference response used to normalize the first tag response with respect one or more of an orientation of the first passive identification tag and environmental conditions of the passive identification tag.

A nineteenth aspect of the present disclosure which does not form part of the claimed invention includes an identification system according to any of the seventeenth through the eighteenth aspects, further comprising a second passive identification tag disposed on a second object, the second passive identification tag comprising a second resonant structure and a second dielectric structure disposed on the second resonant structure to generate a second tag response in response to the second detection signal, wherein, the detector comprises identification logic configured to cause the detector to identify the first and second passive identification tags based on the first and second tag responses.

A twentieth aspect of the present disclosure which does not form part of the claimed invention includes an identification system according to any of the seventeenth through the nineteenth aspects, wherein the tag identification logic identifies aspects of the first and second tag responses that are input to an identification function to generate identifiers associated with the first and second passive identification tags.

A twenty first aspect of the present disclosure which does not form part of the claimed invention includes an identification system according to any of the seventeenth through the twentieth aspects, wherein the first identification tag is positioned within a reference frame of the identification system to maximize the first tag response generated from the detection signal.

A twenty second aspect of the present disclosure which does not form part of the claimed invention includes an identification system according to any of the seventeenth through the twenty first aspects, wherein at least one of: the first identification tag is disposed at a predetermined orientation relative to the transmitter; and the first identification tag comprises a non-planar shape to maximize the first tag response.

A twenty third aspect of the present disclosure which does not form part of the claimed invention includes an identification system according to any of the seventeenth through the twenty second aspects, wherein the resonant structure is formed of a dielectric material, a conductive material, or a combination thereof.

A twenty fourth aspect of the present disclosure which does not form part of the claimed invention includes an identification system according to any of the seventeenth through the twenty third aspects, wherein the resonant structure comprises a pattern of conductive material.

A twenty fifth aspect of the present disclosure which does not form part of the claimed invention includes an identification system according to any of the seventeenth through the twenty fourth aspects, wherein the dielectric structure comprises a dielectric pattern that differs from the pattern of conductive material.

A twenty sixth aspect of the present disclosure which does not form part of the claimed invention includes a method of identifying a passive identification tag. The method includes transmitting a detection signal to a resonant structure of the passive identification tag to generate a baseline response. The method includes modifying the baseline response via a characteristic layer disposed on the resonant structure to generate a tag response. The method includes receiving, via a detector, the tag response. The method includes identifying the passive identification tag based on the tag response using tag identification logic.

A twenty seventh aspect of the present disclosure which does not form part of the claimed invention includes a method according to the twenty sixth aspect, wherein identifying the passive identification tag comprising computing values for one or more variables based on an amplitude component, a phase component, a group delay component, and a phase delay component of the tag response.

A twenty eighth aspect of the present disclosure which does not form part of the claimed invention includes a method according to any of the twenty sixth through the twenty seventh aspects, further comprising, prior to identifying the passive identification tag, normalizing the tag response with respect to a reference response.

A twenty nineth aspect of the present disclosure which does not form part of the claimed invention includes a method according to any of the twenty sixth through the twenty eighth aspects, wherein the reference response is actively generated via a one or more reference structures of the passive identification tag and received by the detector.

A thirtieth aspect of the present disclosure which does not form part of the claimed invention includes a method according to any of the twenty sixth through the twenty eighth aspects, further comprising, determining, via the detector, the presence of the passive identification tag based on the reference response.

A thirty first aspect of the present disclosure which does not form part of the claimed invention includes a method according to any of the twenty sixth through the twenty nineth aspects, wherein the reference response is generated numerically via the detector based on at least one of an environment of the passive identification tag and a response library.

A thirty second aspect of the present disclosure which does not form part of the claimed invention includes a method according to any of the twenty sixth through the thirtieth aspects, further comprising orienting the transmitter relative to the passive identification tag to maximize the tag response.

A thirty third aspect of the present disclosure which does not form part of the claimed invention includes a method according to any of the twenty sixth through the thirty second aspects, wherein: the resonant structure comprises a patterned structure of conductive material, and the characteristic structure comprises a patterned structure of dielectric material.

A thirty fourth aspect of the present disclosure which does not form part of the claimed invention includes a method according to any of the twenty sixth through the thirty third aspects, further comprising selecting the patterned structures of conductive and dielectric material to tailor the tag response of the passive identification tag.

Additional features and advantages of the processes and systems described herein will be set forth in the detailed description which follows, and in part will be readily apparent to those skilled in the art from that description or recognized by practicing the embodiments described herein, including the detailed description which follows, the claims, as well as the appended drawings.

It is to be understood that both the foregoing general description and the following detailed description describe various embodiments and are intended to provide an overview or framework for understanding the nature and character of the claimed subject matter. The accompanying drawings are included to provide a further understanding of the various embodiments, and are incorporated into and constitute a part of this specification. The drawings illustrate the various embodiments described herein, and together with the description serve to explain the principles and operations of the claimed subject matter.

### BRIEF DESCRIPTION OF DRAWINGS

The embodiments set forth in the drawings are illustrative and exemplary in nature and not intended to limit the subject matter defined by the claims. The following detailed description of the illustrative embodiments can be understood when read in conjunction with the following drawings, where like structure is indicated with like reference numerals and in which:
FIG. 1A schematically depicts an identification system including a plurality of passive identification tags, according to one or more embodiments described herein;
FIG. 1B schematically depicts a cross-sectional view of one of the plurality of passive identification tags of the identification system through the line I-I of FIG. 1A, according to one or more embodiments described herein;
FIG. 1C depicts a first plot of amplitudes of a baseline response and a tag response of a passive identification tag, according to one or more embodiments described herein;
FIG. 1D depicts a second plot of phases of a baseline response and a tag response of a passive identification tag, according to one or more embodiments described herein;
FIG. 1E depicts a third plot of group delays of a baseline response and a tag response of a passive identification tag, according to one or more embodiments described herein;
FIG. 1F depicts a fourth plot of phase delays of a baseline response and a tag response of a passive identification tag, according to one or more embodiments described herein;
FIG. 2A schematically depicts a first passive identification tag including a resonant structure without a characteristic layer, according to one or more embodiments described herein;
FIG. 2B schematically depicts a second passive identification tag including a resonant structure and a characteristic layer having a second dielectric structure, according to one or more embodiments described herein;
FIG. 2C schematically depicts a third passive identification tag including a resonant structure and a characteristic layer having a third dielectric structure, according to one or more embodiments described herein;
FIG. 2D schematically depicts a fourth passive identification tag including a resonant structure and a characteristic layer having a fourth dielectric structure, according to one or more embodiments described herein;
FIG. 3A depicts a plot of amplitudes of tag responses generated via the first, second, third, and fourth passive identification tags depicted in FIGS. 2A-2D, according to one or more embodiments described herein;
FIG. 3B depicts a plot of phases of tag responses generated via the first, second, third, and fourth passive identification tags depicted in FIGS. 2A-2D, according to one or more embodiments described herein;
FIG. 3C depicts a plot of group delays of tag responses generated via the first, second, third, and fourth passive identification tags depicted in FIGS. 2A-2D, according to one or more embodiments described herein;
FIG. 3D depicts a plot of phase delays of tag responses generated via the first, second, third, and fourth passive identification tags depicted in FIGS. 2A-2D, according to one or more embodiments described herein;
FIG. 4A depicts a plot of amplitudes of tag responses of a passive identification tag at two different orientations relative to a detection signal, according to one or more embodiments described herein;
FIG. 4B depicts a plot of phases of tag responses of a passive identification tag at two different orientations relative to a detection signal, according to one or more embodiments described herein;
FIG. 4C depicts a plot of group delays of tag responses of a passive identification tag at two different orientations relative to a detection signal, according to one or more embodiments described herein;
FIG. 4D depicts a plot of phases of phase delays of a passive identification tag at two different orientations relative to a detection signal, according to one or more embodiments described herein;
FIG. 5 schematically depicts a passive identification including a reference resonant structure configured to generate a reference response from a detection signal that may be used to normalize a tag response, according to one or more embodiments described herein;
FIG. 6A depicts a plot of normalized amplitudes of tag responses of a passive identification tag at two different orientations relative to a detection signal, according to one or more embodiments described herein;
FIG. 6B depicts a plot of normalized phases of tag responses of a passive identification tag at two different orientations relative to a detection signal, according to one or more embodiments described herein;
FIG. 6C depicts a plot of normalized group delays of tag responses of a passive identification tag at two different orientations relative to a detection signal, according to one or more embodiments described herein;
FIG. 6D depicts a plot of normalized phases of phase delays of a passive identification tag at two different orientations relative to a detection signal, according to one or more embodiments described herein;
FIG. 7A schematically depicts a passive identification tag fixed at a particular orientation relative to a transmitter, according to one or more embodiments described herein;
FIG. 7B schematically depicts a non-planar passive identification including a plurality of sections extending at an angle relative to one another, according to one or more embodiments described herein;
FIG. 7C schematically depicts a non-planar passive identification tag including a curved surface, according to one or more embodiments described herein; and
FIG. 8 depicts a flow diagram of a process of identifying a passive identification tag from a tag response generated from a detection signal.

### DESCRIPTION OF EMBODIMENTS

Reference will now be made in detail to embodiments of passive identifications tags including a non-conductive substrate, a resonant structure, and a characteristic layer disposed on the non-conductive substrate. The resonant structure is configured to generate a baseline response from a detection signal incident thereon. The characteristic layer modifies at least one of an amplitude, phase, group delay, and phase delay of the baseline response to generate a tag response. The tag response may be a portion of the detection signal that is modified and transmitted through or reflected by the passive identification tag. The tag response may propagate from the passive identification tag and be received by a detector configured to generate an analog signal including an amplitude component, phase component, group delay component, and phase delay component. The detector (or a system communicably coupled thereto) may include identification logic for processing the analog signal, characterizing the analog signal by generating values for pre-defined variables for the analog signal, and identifying the passive identification tag using an identification function. As such, by implementing the passive identification tag in an inventory scheme including a plurality of passive identification tags with different resonant structure-characteristic layer combinations, the plurality of passive identification tags may each be uniquely identified by measuring tag responses generated from one or more detection signals.

By utilizing multiple components (e.g., amplitude, phase, group delay, and phase delay) of a tag response, the passive identification tags of the present disclosure are able to be distinguished from one another using relatively few components as compared with existing chipless inventory tags. For example, existing passive inventory tags may generate binary responses when a resonant radio frequency ("RF") signal impinges on their surface. Such a binary response approach may rely on a large number of resonant structures (or tag elements), which renders their structure complex and difficult to incorporate into products. The passive identification tags of the present disclosure, in contrast, may be tuned to generate a tag response convertible to an analog signal in response to detection signals at any non-visible frequency (e.g., wavelengths from 100,000 km to 1 mm, frequencies from 1 KHz to 300 GHz). Materials of the resonant structures and characteristic layers described herein may be patterned and/or selected to generate a unique tag response to the detection signals while using minimal components. As a result, the passive identification tags described herein may be easily incorporated into or disposed on different products, providing a high degree of flexibility for users (e.g., manufacturers in a supply chain).

The passive identification tags of the present disclosure may rely on unique combinations of patterns of conductive and non-conductive materials to create a plurality of unique tag responses at continuous or discrete frequencies. In embodiments, the combinations of patterns may generate unique tag responses when in the presence of RF signals. The flexibility of the passive identification tags described herein enable more informed decisions about supply chain management and logistics. By avoiding the use of any active elements (e.g., chips, batteries, and the like), the passive identification tags described herein also provide a cost effective way to generate unique tag responses. For example, by patterning dielectric material of a characteristic layer, an area of response of particular resonant structure may be adjusted by, for example, adjusting absorption, reflection, or a combination thereof of an incoming detection signal (e.g., the characteristic layer may absorb detection signals at a first frequency and reflect detection signals at a second frequency, or different dielectric materials may cover different portions of the resonant structure to both absorb and reflect a detection signals). The characteristic layer may also be polarized to filter polarized detection signals or to adjust the tag response in terms of polarization.

Protective structures may also be added to the passive identification tags described herein to provide enhanced durability and longevity. In embodiments, the protective structure may be constructed of a suitable dielectric material such as high density polyethylene (HDPE). The protective structure may be a layer of dielectric material that encapsulates the resonant structure and the characteristic layer and is configured to prevent changes in material properties, such as dielectric constant, conductivity, and geometry of the resonant structure and/or characteristic layer from environmental exposure (e.g., via one or more of oxidation, corrosion, or wear of the resonant structure and/or characteristic layer). As result, the passive identification tags described herein may be cost effective and durable, while providing the ability to uniquely identify a relatively large number of goods in a supply chain environment.

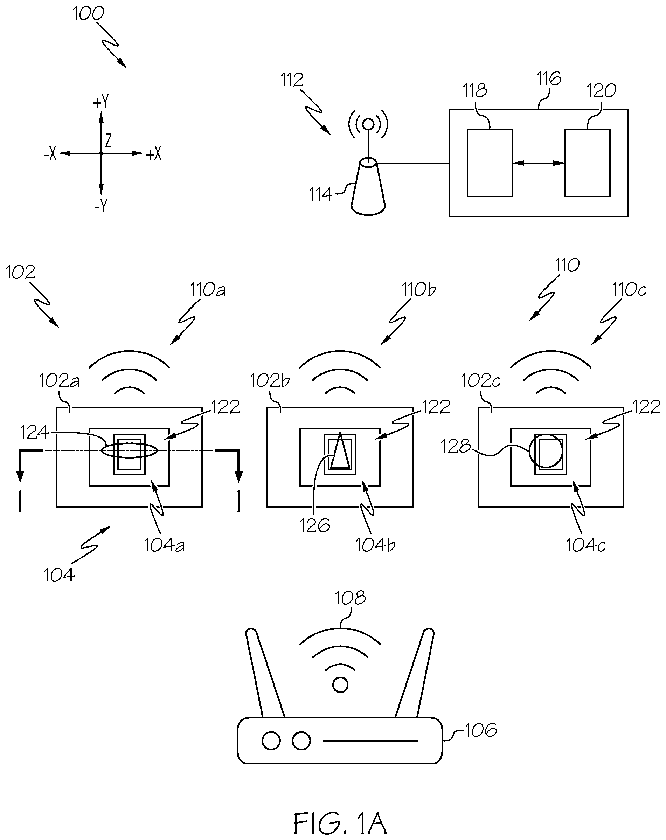

FIG. 1A schematically depicts an identification system 100 in accordance with an example embodiment. The identification system 100 may be used to identify a plurality of objects 102 via a plurality of passive identification tags 104. The identification system 100 may be used in any context where discerning the presence of and identifying the plurality of objects 102 is desired. In an example, the various components of the identification system 100 may be disposed in a manufacturing facility and the plurality of objects 102 may be inventory objects that are useful for a manufacturer to track, count, and/or identify. It should be understood that embodiments are envisioned where certain embodiments of the identification system 100 may not lie at the same location. For example, the identification system 100 is depicted to include a transmitter 106 configured to generate a detection signal 108 that is used to interrogate the plurality of passive identification tags 104 to cause the plurality of passive identification tags 104 to generate (e.g., reflect or transmit) a plurality of tag responses 110. Embodiments are envisioned where the detection signal 108 is an ambient network signal that is associated with, for example, a 5G network in the mm wavelength range. In embodiments, the detection signal 108 is a WiFi signal operating in a frequency range of between 1 GHz and 8 GHz). As such, the transmitter 106 may not be in the same location as the plurality of objects 102, but rather disposed in a remote location.

The detection signal 108 generated by the transmitter 106 may have a variety of forms depending on the implementation. In embodiments, the transmitter 106 includes a RF signal generator configured to generate a discrete frequency signal that is adjustable in one or more of an amplitude, frequency, or a propagation direction. Such an adjustable signal may be used to measure proportionalities between the plurality of tag responses 110 and the amplitude of the detection signal 108, or to measure dependencies of the plurality tag responses 110 on frequency or angles of incidence (e.g., caused by location changes) of the detection signal 108. In embodiments, the transmitter 106 comprises an RF signal generator configured to generate a continuous frequency RF signal that lies within a predetermined spectral band of interest. In embodiments, the transmitter 106 generates a detection signal 108 that is adjustable in one or more of power, time, direction, frequency, and polarization so as to generate the plurality of tag responses 110 via the plurality of passive identification tags 104.

The plurality of passive identification tags 104 may be disposed on and/or integrated into the plurality of objects 102. For example, in embodiments, the plurality of passive identification tags 104 are attached to the plurality of objects 102 using a suitable attachment technique (e.g., using an adhesive other suitable form of mechanical fixation). The plurality of objects 102 includes a first object 102a, a second object 102b, and a third object 102c. A first passive identification tag 104a is disposed on or integrated into the first object 102a. A second passive identification tag 104b is disposed on or integrated into the second object 102b. A third passive identification tag 104c is disposed on or integrated into the third object 102c. The first, second, and third passive identification tags 104a, 104b, and 104c are configured to generate a first, second, and third tag responses 110a, 110b, and 110c, respectively, from the electromagnetic energy of the detection signal 108 provided by the transmitter 106. As described herein, each of the plurality of passive identification tags 104 may have a unique structure such that each of the first, second, and third tag responses 110a, 110b, and 110c are distinguishable from one another

The plurality of tag responses 110 generated by the plurality of passive identification tags 104 are detected via a receiving system 112. The receiving system 112 includes a detector 114 (e.g., an RF receiver) configured to receive the plurality of tag responses 110 and generate analog signals. The analog signals may be analyzed by an analysis system 116 to identify the plurality of passive identification tags 104 based on the plurality of tag responses 110. In embodiments, the analysis system 116 includes a computing system including a processor 118 and a memory 120. While the analysis system 116 is depicted to include a single processor 118, it should be appreciated that the analysis system 116 may include any number of processors depending on the implementation. The processor 118 can include any suitable processing device, such as a microprocessor, microcontroller, integrated circuit, logic device, a microchip, a computer, and/or other suitable processing device. In embodiments, the processor 118 is a processing circuit (e.g., either a single processing circuit or a group processing circuit) that executes some or all of the machine-readable instructions from multiple modules of one or more non-transitory computer-readable mediums (e.g., the memory 120). The processor 118 can be any device capable of executing machine readable instructions.

The memory 120 is communicatively coupled to the processor 118. As a non-limiting example, the memory 120 may comprise one or more non-transitory computer-readable medium that may be one of a shared memory circuit, dedicated memory circuit, or group memory circuit. Non-limiting examples of the memory include random access memory (including SRAM, DRAM, and/or other types of random access memory), readonly memory (ROM), flash memory, registers, compact discs (CD), digital versatile discs (DVD), and/or other types of storage components capable of storing machine readable instructions such that the machine readable instructions can be accessed and executed by the processor 118. Memory 120 may store instructions accessible to the processor 118 via an addressing scheme such that the processor 118 may access the memory 120 to execute the instructions in accordance with a program to perform any of the functions and operations described herein. For example, as described herein, the memory 120 may store identification logic including instruction sets that cause the processor 118 to process (e.g., normalize and filter) the plurality of tag responses 110 and identify the plurality of passive identification tags 104 based on the plurality of tag responses 110. Examples of such operations will be described in greater detail herein.

Referring still to FIG. 1A, the plurality of tag responses 110 generated via the plurality of passive identification tags 104 are distinguishable from one another. In embodiments, the plurality of tag responses 110 are rendered distinguishable via the structures of each of the plurality of passive identification tags 104. In the example depicted in FIG. 1A, each of the plurality of passive identification tags 104 includes a resonant structure 122. In embodiments, the resonant structure 122 is formed of a dielectric material, a conductive material, or a combination thereof. For example, in embodiments, the resonant structure 122 may include a pattern of a suitable conductive material (e.g., silver, gold, platinum, aluminium, copper, a metallic alloy) that is configured to generate a baseline response (e.g., in a reflectance or transmittance mode) from the detection signal 108. Such a pattern of conductive material may be formed from conductive layers disposed on the plurality of objects 102 (or substrates disposed thereon). In embodiments, the resonant structure 122 is a periodic array of conductive structures that form a frequency selective surface.

In the depicted embodiment, the resonant structure 122 comprises a plurality of square resonators arranged in a predetermined pattern to form a predetermined LC circuit generating a baseline response from the detection signal 108. The square resonators may be separated from one another by gaps to selectively determine the baseline response of each of the plurality of passive identification tags 104. While the first, second, and third passive identification tags 104a, 104b, and 104c, are depicted in FIG. 1A to include the same resonant structure 122, it should be appreciated that the resonant structures of each of the plurality of passive identification tags 104 may vary from one another. Indeed, the resonant structure 122 may vary between the plurality of passive identification tags 104 such that one or more of the plurality of passive identification produces a different (or distinguishable) baseline response from the detection signal 108.

In the example shown in FIG. 1A, the plurality of passive identification tags 104 differ from one another in that each of the plurality of passive identification tags 104 includes a characteristic layer having a different structure. In embodiments, the characteristic layer is a patterned layer of a suitable dielectric material (e.g., formed of polyethylene terephthalate (PET), high density polyethylene (HDPE), carbon black, titanium dioxide, or other suitable dielectric). The characteristic layers may form dielectric structures that modify the baseline responses of each tag. In embodiments, characteristic layer comprises dielectric material that is disposed between separate portions of the resonant structure 122 (e.g., such that the characteristic layer does not overlap or cover the resonant structure 122). In embodiments, the characteristic layer at least partially covers or extends over the resonant structure 122. As shown, for example, the first passive identification tag 104a includes a first dielectric structure 124 that is oval-shaped and partially covering the resonant structure 122. The second passive identification tag 104b includes a second dielectric structure 126 that is triangular-shaped and partially covering the resonant structure 122. The third passive identification tag 104c includes a third dielectric structure 128 that is circle-shaped and partially covering the resonant structure 122. The dielectric structures 124, 126, and 128 may modify the baseline response generated via the resonant structure 122 of each of the plurality of passive identification tags 104. Such modifications to the baseline response may occur by at least one of detuning the baseline response, coupling the baseline response, and absorbing the baseline response.

The dielectric structures 124, 126, and 128 selectively adjust areas of response by modifying the baseline responses generated by each resonant structure 122. For example, in embodiments, the dielectric structures 124, 126, and 128 may selectively reflect different portions of the detection signal 108 such that a predetermined pattern of the detection signal 108 induces a response via the resonant structure 122. In embodiments, the areas of the resonant structure 122 covered by the dielectric structures 124, 126, and 128 may cause one or more components (e.g. an amplitude component, a phase component, a group delay component, and a phase delay component) of the baseline response of each of the plurality of passive identification tags 104 generated via the detection signal 108 to vary from one another in distinctive ways to facilitate each of the plurality of passive identification tags 104 being identified via the receiving system 112.

While the dielectric structures 124, 126, and 128 depicted in FIG. 1A are shown to be solid geometric structures (e.g., at least portions of a circle, a square, a triangle, and a tear-drop-shaped section of dielectric material), it should be appreciated that the dielectric structures 124, 126, and 128 may form any pattern of dielectric material. Such patterns may spatially vary in terms of three or more different dimensions (e.g., length, width, and thickness, extending along the X, Y, and Z axes depicted in FIG. 1A) with position on each of the plurality of objects 102. For example, in embodiments, one or more of the dielectric structures 124, 126, and 128 includes a variable thickness dielectric layer that may absorb the detection signal 108 in a distinctive spatial pattern to selectively modify the baseline response to the detection signal 108. In embodiments, one or more of the dielectric structures 124, 126, and 128 includes a plurality of discrete structures of dielectric material (e.g., a pattern of dots or a plurality of sections of geometric shapes). Any dielectric structure capable of modifying the baseline response of the resonant structure 122 may be used as one of the dielectric structures 124, 126, and 128 of the present disclosure.

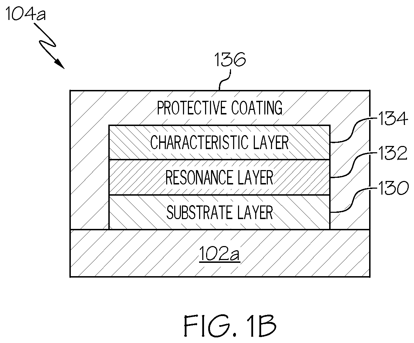

FIG. 1B depicts a cross-sectional view of the first passive identification tag 104a and the first object 102a through the line I-I of FIG. 1A, according to an example embodiment. The depicted cross section of the first passive identification tag 104a may be representative of the plurality of passive identification tags 104 described herein with respect to FIG. 1A. The first passive identification tag 104a is depicted to be disposed on the first object 102a and include a substrate 130, a resonance layer 132 disposed on the substrate 130, a characteristic layer 134 disposed on the resonance layer 132, and a protective structure 136 covering portions of the substrate 130, resonance layer 132, and characteristic layer 134. As described herein, the first passive identification tag 104a may be configured to generate a tag response 110a (see FIG. 1A) that is distinctive from electromagnetic energy associated with a detection signal provided thereto from a transmitter (e.g., an ambient network signal such as 5G, a radio frequency ("RF") transmitter configured to generate a predetermined detection signal).

In embodiments, the substrate 130 is a non-conductive layer (e.g., of a suitable dielectric material) that is adhered to the first object 102a via a suitable attachment method (e.g., adhesive, welding, brazing, bonding). In embodiments, the substrate 130 is constructed of a material selected to not modify the baseline response generated via the resonance layer 132 so as to avoid noise or disruption of the first tag response 110a (see FIG. 1A). In embodiments, the substrate 130 includes a material configured to absorb a detection signal to prevent noise in the first tag response 110a. While the first object 102a and the substrate 130 are depicted to be separate components, it should be understood that embodiments are envisioned where the substrate 130 is a portion of the first object 102a (e.g., such that the resonance layer 132 is disposed directly on the first object 102a) are contemplated and within the scope of the present disclosure.

In embodiments, the resonance layer 132 is a conductive layer comprising the resonant structure 122 described herein with respect to FIG. 1A. In embodiments, the resonance layer 132 is formed of a dielectric material, a conductive material, or a combination thereof. In embodiments, the resonance layer 132 comprises a plurality of structures that may be coupled to one another to form various circuit equivalents to generate baseline responses to one or more detection signals from a transmitter. In embodiments, the resonance layer 132 includes capacitive and inductance-based structures to generate a baseline response from the detection signal 108 (see FIG. 1A). For example, in embodiments, the resonance layer 132 may include a square resonator including a plurality (e.g., four) square-shaped structures to form RLC circuit equivalent within the resonance layer 132. In embodiments, the resonance layer 132 is polarized to generate a tag response in response to a detection signal of a particular polarization. In embodiments, the resonance layer 132 includes a plurality of independent structures (e.g., patches) that are deposited onto the substrate 130 in a desired pattern.

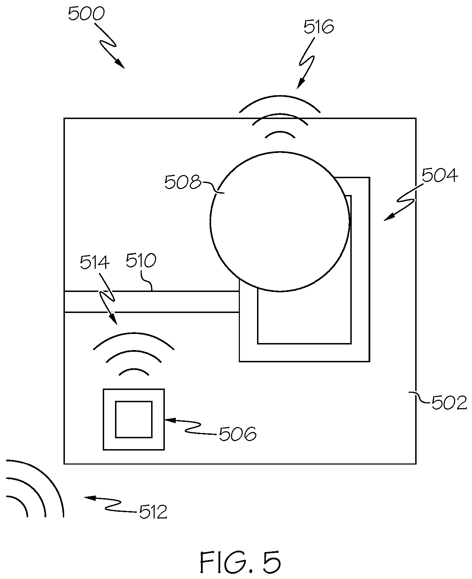

In embodiments, the resonance layer 132 includes the resonant structure 122 described herein with respect to FIG. 1A, as well as one or more additional conductive structures to add further functionalities to the first passive identification tag 104a. For example, as described in greater detail herein with respect to FIG. 5, the resonance layer 132 may include a reference resonant structure configured to generate a reference response from the detection signal 108 (see FIG. 1A). In embodiments, the reference resonant structure may not be covered by the characteristic layer 134 such that the reference resonant structure generates a reference response that is used by the receiving system 112 (see FIG. 1A) to normalize the first tag response 110a to account for factors of the operating environment of the identification system 100 (e.g., the relative orientation of the transmitter 106 relative to the first passive identification tag 104a, addition signal noise, environmental factors, and the like).

Referring still to FIG. 1B, in embodiments, the resonance layer 132 includes one or more sensor structures to facilitate connecting the resonant structure 122 (see FIG. 1A) to external sensors (e.g., temperature, humidity, or any other environmental factor). The sensor structure may include a structure of conductive leads and/or resistance structures disposed on the substrate 130 and connected to the resonant structure 122. In embodiments, the sensor structure may have a varied resistance or conductivity based on the readings of the external sensor to actively adjust the first tag response 110a in response to changing external environmental conditions. Tamper sensors may also be connected to the first passive identification tag 104a via the sensor structure to determine metrics associated with the object 102a. As such, the resonance layer 132 may include a variety of different combinations of conductive structures to provide a variety of different levels of functionality to the first passive identification tag 104a.

In embodiments, the characteristic layer 134 is a dielectric or non-conductive layer that is used to selectively adjust areas of response of the resonance layer 132 via one or more of absorption, reflection, detuning the baseline response, and coupling the baseline response generated via the resonant structure 122 responsive to the detection signal (see FIG. 1A). The characteristic layer 134 may include the dielectric structure 124 described herein with respect to FIG. 1A. For example, in embodiments, the characteristic layer 134 may be patterned to leave a predetermined portion of the resonance layer 132 uncovered, while reducing the detectable response of other portions of the resonance layer 132. The characteristic layer 134 may include a predetermined thickness (or distribution of thicknesses that varies as a function of location on the substrate 130) such that portions of the resonance layer 132 that are covered thereby generate an attenuated response when viewed (e.g., by a receiver or detector) from a particular direction.

The characteristic layer 134 may include a pattern of dielectric material that is used to adjust a location of a resonance (e.g., in terms of frequency) and also an amplitude of any of the components of the tag response 110a (see FIG. 1A) described herein. The tag response 110a may vary as a function of the material properties of the characteristic layer 134 (e.g., in terms of thickness and dielectric constant). As a result, various aspects of the characteristic layer 134 (e.g., the pattern, the thickness, the material used) may be used to differentiate the tag response 110a from other ones of the plurality of tag responses 110 of the identification system 100 (see FIG. 1A).

In embodiments, the characteristic layer 134 is configured to selectively tune at least one aspect of the first tag response 110a generated via the first passive identification tag 104a. For example, in embodiments, the characteristic layer 134 may include a polarity-selective material, or a material that only allows signals having a particular power, angle, polarization, phase, or frequency band to pass therethrough. For example, the characteristic layer may include adjusted material properties extending at an angled boundary to adjust the first tag response 110a. In embodiments, the characteristic layer 134 may include a doped dielectric material that is deposited in a staggered manner to create an interface between doped regions (e.g., extending at an angle to a surface normal of the resonance layer 132). The angle may determine the angle of incidence of the detection signal 108 (see FIG. 1A) that generates a baseline response via the resonance layer 132 (e.g., by controlling which angles of incidence pass through). In embodiments, the characteristic layer 134 includes a polarization filter than only allows detection signals having particular polarizations to pass therethrough to generate the first tag response 110a. In embodiments, the characteristic layer 134 comprises a bandpass filter only allowing detection signals within a particular spectral range of interest to reach the resonance layer 132 to generate the first tag response 110a. In embodiments, the characteristic layer 134 is constructed of a plurality of different dielectric materials. Boundaries between such materials may be used to manipulate the directionality, phase, and amplitude of the first tag response 110a.

Embodiments are also envisioned where the resonance layer 132 includes a patch or micro-strip antenna or other conductive structure disposed or embedded therein. Such an antenna, for example, may receive the detection signal 108 (see FIG. 1A) and generate a secondary detection signal that is used to generate the first tag response 110a via the resonance layer 132. The antenna may be tuned to generate such a secondary detection signal only from detection signals having pre-determined attributes (e.g., in terms of frequency, power, and angles of incidence) to filter noise out of the detection process described herein. The antenna may also be configured to generate a secondary detection signal over a wide range of angles of incidence (e.g., between 0° and 90° relative to a surface normal of the first passive identification tag 104a) to facilitate the resonance layer 132 generating a baseline response in response to a variety of different detection signals.

Referring still to FIG. 1B, the protective structure 136 extends over or covers at least one of the substrate 130, resonance layer 132, and the characteristic layer 134 to protect the first passive identification tag 104a from environmental degradation. In embodiments, the protective structure 136 includes a layer of suitable dielectric material that completely encapsulates (e.g., extends over an covers an entirety of) the resonance layer 132 and the characteristic layer 134. In embodiments, for example, the protective structure 136 is formed of a suitable polymeric material such as high-density polyethylene (HDPE) to provide protection against harm that the first object 102a may be exposed to in a supply chain environment. The protective structure 136 may prevent wear and tear of the first passive identification tag 104a despite being in a damage-inducing environment. The protective structure 136 may also prevent changes in material properties to the resonance layer 132 and the characteristic layer 134 from environmental exposure. For example, the protective structure 136 may protect the resonance layer 132 and the characteristic layer 134 from oxidation or corrosion. Without the protective structure 136, for example, corrosion of the resonance layer 132 may alter the first tag response 110a (e.g., by changing the electrical conductivity thereof). Changes in dielectric properties from oxidation of the characteristic layer 134 may also change the first tag response 110a. By preventing such changes in material properties to the first passive identification tag 104a, the protective structure 136 may maintain consistency the first tag response 110a over a long period of time to render the detection methods described herein effective.

In embodiments, the first passive identification tag 104a (or any of the passive identification tags described herein) may include a visual cue (not depicted). The visual cue may include one or more markings or other features that are disposed on one or more of the protective structure 136, characteristic layer 134, resonance layer 132, and substrate 130. In embodiments, the visual cue may include a label attached to the protective structure 136. The label may include a marking identifying the first passive identification tag 104a. In embodiments, the label may include a bar code or other machine-readable code (e.g., a QR code or the like) that may be scanned to identify the first passive identification tag 104a. In embodiments, the visual cue may be engraved or integrated into the first passive identification tag 104a. In embodiments, the visual cue may comprise patterned material (e.g., a tinted dielectric layer) printed onto the protective structure 136. The visual cue may be used to aid in identifying the object 102a on which the first passive identification tag 104a is disposed. In embodiments, the visual cue is detachable from the first passive identification tag 104a.

It should be understood that the first passive identification tag 104a represents only an example of the plurality of passive identification tags 104 that may be used in the identification system 100 described herein with respect to FIG. 1A. For example, in embodiments, passive identification tags including additional layers may be used. According to various example embodiments, a passive identification tag may include one or more of a sensor layer built to connect with external sensors (e.g., via resonance or other conductive structures), a reference layer including a conductive structure configured to generate a stable reference response that tells a receiver that a tag is being read and render subsequent processing easier, a tune layer that is used to tune the receiver or transmitter based on conductive structures therein that allow a particular type of wave (e.g., in terms of power, angle, polarization, frequency) to pass therethrough (e.g., the tune layer may tune a detection signal from a transmitter to induce a response in the resonance layer 132 that is then modified via the characteristic layer 134), and a charged polarizer layer that is non-conductive but may include a charged boundary to only allow particular detection signals to pass therethrough (e.g., possessing a certain angle of incidence, polarization, frequency, power, and/or phase). That is, the first passive identification tag 104a represents only a base tag that may be used and passive identification tags have a variety of different combinations of layers may be used in accordance with the present disclosure.. Any combination of conductive and non-conductive layers may be added to the first passive identification tag 104a to add any desired functionality or response features thereto.

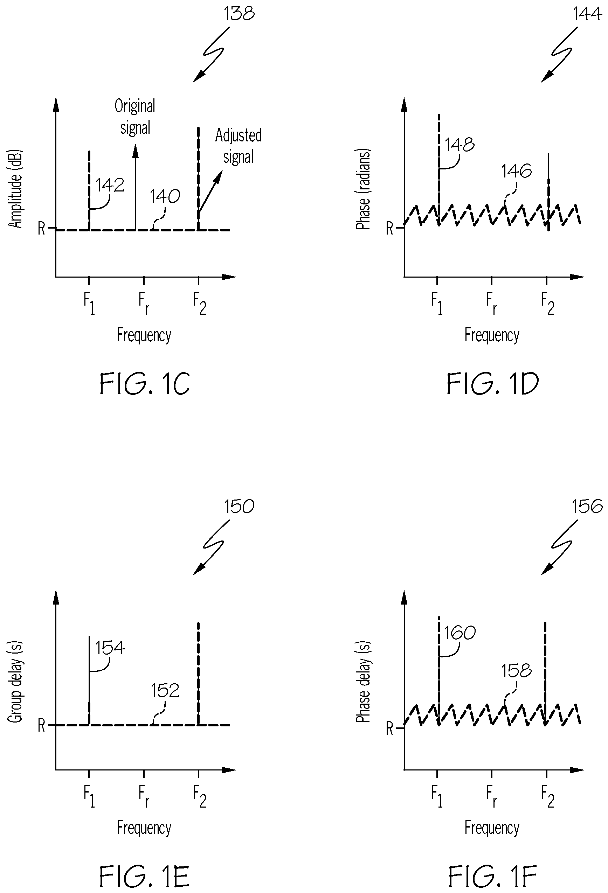

With reference to FIGS. 1A, 1C, 1D, 1E, and 1F, in embodiments, the receiving system 112 is configured to detect a full vector response associated with one or more of the plurality of passive identification tags 104. The tag identification logic in the memory 120 of the analysis system 116 may include filtering and Fourier transform analysis modules to generate the plurality of components of the vector response of each tag. Internal RF electronics of the receiving system 112 (e.g., in the analysis system 116) may convert RF waves of each of the plurality of tag responses 110 to analog signals that are processed via the tag identification logic to quantify aspects of the components of the vector response of each of the plurality of passive identification tags 104.

FIGS. 1C-1F depict illustrative examples of components of one of the plurality of tag responses 110 in an as processed condition (e.g., after filtering and Fourier transform analysis via the analysis system 116). The components depicted in FIG. 1C-1F may depict filtered signals of a tag response to a detection signal 108 that is a continuous frequency detection signal (e.g., including two frequencies F₁ and F₂). FIG. 1C depicts a frequency domain plot 138 of amplitudes of a baseline response 140 and a tag response 142. The baseline response 140 may be generated by, for example, the resonance layer 132 of the first passive identification tag 104a described herein with respect to FIG. 1B). As shown, the tag response 142 varies in amplitude from the baseline response 140 at both the first frequency F₁ and the second frequency F₂ due to the dielectric structure incorporated into the tag. FIG. 1D depicts a frequency domain plot 138 of phases of a baseline response 146 and a tag response 148. The baseline response 146 may be generated by, for example, the resonance layer 132 of the first passive identification tag 104a described herein with respect to FIG. 1B). As shown, the tag response 148 varies in phase from the baseline response 156 at both the first frequency F₁ and the second frequency F₂ due to the dielectric structure incorporated into the tag. FIG. 1E depicts a frequency domain plot 150 of group delays of a baseline response 152 and a tag response 154. The baseline response 152 may be generated by, for example, the resonance layer 132 of the first passive identification tag 104a described herein with respect to FIG. 1B). As shown, the tag response 154 varies in group delay from the baseline response 152 at both the first frequency F₁ and the second frequency F₂ due to the dielectric structure incorporated into the tag. FIG. 1F depicts a frequency domain plot 156 of phase delays of a baseline response 158 and a tag response 160. The baseline response 158 may be generated by, for example, the resonance layer 132 of the first passive identification tag 104a described herein with respect to FIG. 1B). As shown, the tag response 160 varies in group delay from the baseline response 158 at both the first frequency F₁ and the second frequency F₂ due to the dielectric structure incorporated into the tag.

As depicted in FIGS. 1C-1F, the dielectric structures may be used to modify various components of a baseline response of one of the plurality of passive identification tags 104 in different ways. By varying the pattern and/or geometry of the dielectric structure covering the resonant structure 122, for example, the plurality of tag responses 110 may be differentiated from one another via one or more of the amplitude, phase, group delay, and phase delay of the analog signals generated via the receiving system 112. Identification logic stored in the memory 120, for example, may process filtered signals similar to those depicted in FIGS. 1C-1F to compute values for variables (e.g., amplitude at a particular frequency, average phase over a range of frequencies, etc.) that may be used to identify the plurality of passive identification tags 104 from the plurality of tag responses 110. Such variables may be input to a tag identification function that outputs an identifier (e.g., an identification number) associated with one of the plurality of passive identification tags 104 or one of the plurality of objects 102 to facilitate tracking of the plurality of objects 102. The utilization of dielectric structures to modify baseline responses of resonant structures provides a cost-effective way to generate a plurality of distinctive signals. The analog detection methods described herein facilitate the utilization of such dielectric structures to induce differentiable tag responses.

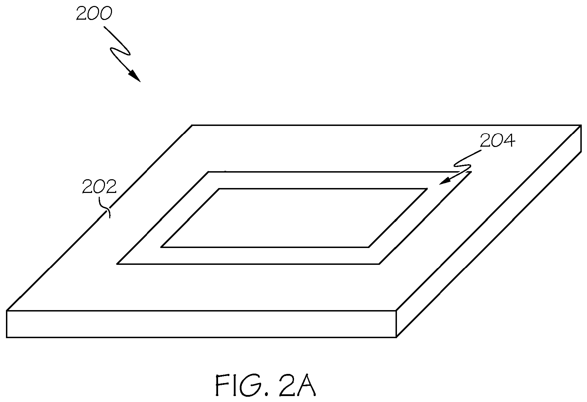

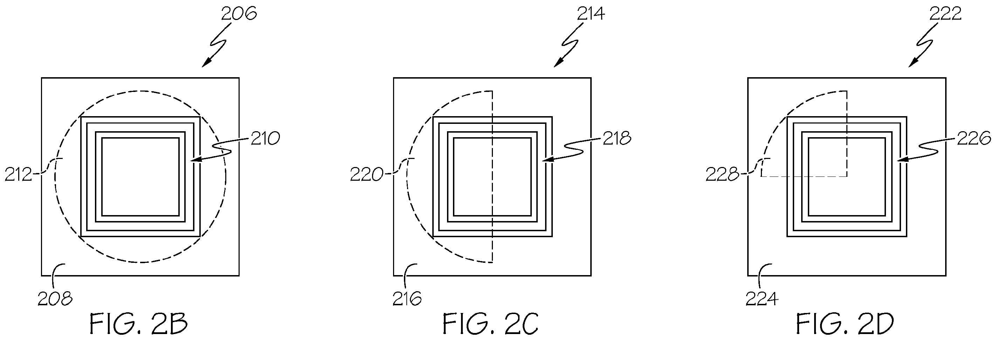

FIGS. 2A-2D depict various examples passive identification tags that may, for example, be used as the plurality of passive identification tags 104 of the identification system 100 described herein with respect to FIGS. 1A-1G. FIG. 2A schematically depicts a first passive identification tag 200 including a first resonant structure 204 disposed on a first substrate 202. The first passive identification tag 200 may not include a characteristic layer or dielectric structure. FIG. 2B schematically depicts a second passive identification tag 206 including a second resonant structure 210 disposed on a second substrate 208 and a second dielectric structure 212 at least partially covering the second resonant structure 210. FIG. 2C schematically depicts a third passive identification tag 214 including a third resonant structure 218 disposed on a third substrate 216 and a third dielectric structure 220 at least partially covering the third resonant structure 218. FIG. 2D schematically depicts a fourth passive identification tag 222 including a fourth resonant structure 226 disposed on a fourth substrate 224 and a fourth dielectric structure 228 at least partially covering the fourth resonant structure 226.

In the depicted example, the first substrate 202, second substrate 208, third substrate 216, and fourth substrate 224 are similar in structure. For example, in embodiments, the first substrate 202, second substrate 208, third substrate 216, and fourth substrate 224 are constructed of a suitable dielectric material (e.g., HDPE) and include a suitable adhesive on a rear surface thereof (e.g., opposite to the resonant structures) to facilitate attachment to various objects. In embodiments, the first substrate 202, second substrate 208, third substrate 216, and fourth substrate 224 are products that are identified via the first passive identification tag 200, second passive identification tag 206, third passive identification tag 214, and fourth passive identification tag 222. In some embodiments, the first substrate 202, second substrate 208, third substrate 216, and fourth substrate 224 may be constructed of different materials.

The first resonant structure 204, the second resonant structure 210, the third resonant structure 218, and the fourth resonant structure 226 are the same in the depicted embodiment. In embodiments, the resonant structures comprises concentric squares of a suitable conductive material (e.g., copper, silver, gold, or an alloy) to form an LC circuit equivalent to resonate to a predetermined RF signal in order to generate a baseline response that is modified by each of the second dielectric structure 212, third dielectric structure 220, and the fourth dielectric structure 228. The depicted examples demonstrate how different geometries of dielectric material may be used to modify a baseline response generated by a particular resonant structure in order to generate a distinctive tag response.

The first passive identification tag 200 is depicted to not include a dielectric structure or characteristic layer. As such, the first passive identification tag 200 may generate a baseline response via the first resonant structure 204 that is not modified. As described herein, such a passive identification tag (or uncovered resonant structure that is the same as that used to form a passive identification tag including a characteristic layer) may be used to normalize or process tag responses for environmental conditions (such as orientation of a transmitter relative to a passive identification tag). As shown in FIG. 2B, the second dielectric structure 212 includes a circle of dielectric material that completely covers the second resonant structure 210. In the depicted embodiment, the circle is centered with respect to the second resonant structure 210, and the radius of the circle is larger than the second resonant structure 210 such that portions of the second dielectric structure 212 overhang the second resonant structure 210 (or are cantilevered from a peripheral edge of the second resonant structure 210). Embodiments are also envisioned where the second dielectric structure 212 does not overhang the second resonant structure 210.

As shown in FIGS. 2C and 2D, the third dielectric structure 220 and the fourth dielectric structure 228 are truncated versions of the second dielectric structure 212. The third dielectric structure 220 is a half circle that is oriented to cover exactly half of the third resonant structure 218. The fourth dielectric structure 228 is a quarter circle that is oriented to cover exactly a quarter of the fourth resonant structure 226. In embodiments, for example, the second, third, and fourth dielectric structures 212, 220, and 228 are formed of a material that reflects, absorbs, or both reflects and absorbs a detection signal at a frequency that induces a baseline response in the second, third, and fourth resonant structures 210, 218, and 226, respectively. As a result, the detection signal reaching the second, third, and fourth resonant structures 210, 218, and 226 may be modulated in proportion to the volume and dielectric constant of dielectric material in each of the second, third, and fourth dielectric structures 212, 220, and 228 to modulate one or more of the resonance location (e.g., in terms of frequency) and component magnitudes (e.g., magnitudes of one or more of an amplitude, phase, group delay, and phase delay) of the tag responses of each of the second, third, and fourth passive identification tags 206, 214, and 222.

**In** embodiments, the first, second, third, and fourth resonant structures 204, 210, 218, and 226 are each configured to generate the same baseline response from the same detection signal (e.g., at a particular frequency, power, and orientation). As a result, the different dielectric structures disposed thereon may manipulate the baseline responses differently such that the first, second, third, and fourth passive identification tags 200, 206, 214, and 222 may be distinguished from one another by measuring different vector components of each tag responses.

As demonstrated by the examples described with respect to FIGS. 2A-2D, the passive identification tags of the present disclosure may include various geometries and patterns of dielectric material to selectively alter baseline responses of resonant structures to detection signals. **In** embodiments, at least one of the first, second, third, and fourth passive identification tags 200, 206, 214, and 222 includes a resonant structure (or combination of resonant structures) that differs from those of the others to generate a distinguished tag response. **In** embodiments at least one of the first, second, third, and fourth passive identification tags 200, 206, 214, and 222 includes a plurality of discrete dielectric structures (e.g., having the same shape or shapes that differ from one another in size and/or geometry) covering multiple distinct portions of the dielectric structures to generate distinguishable tag responses.

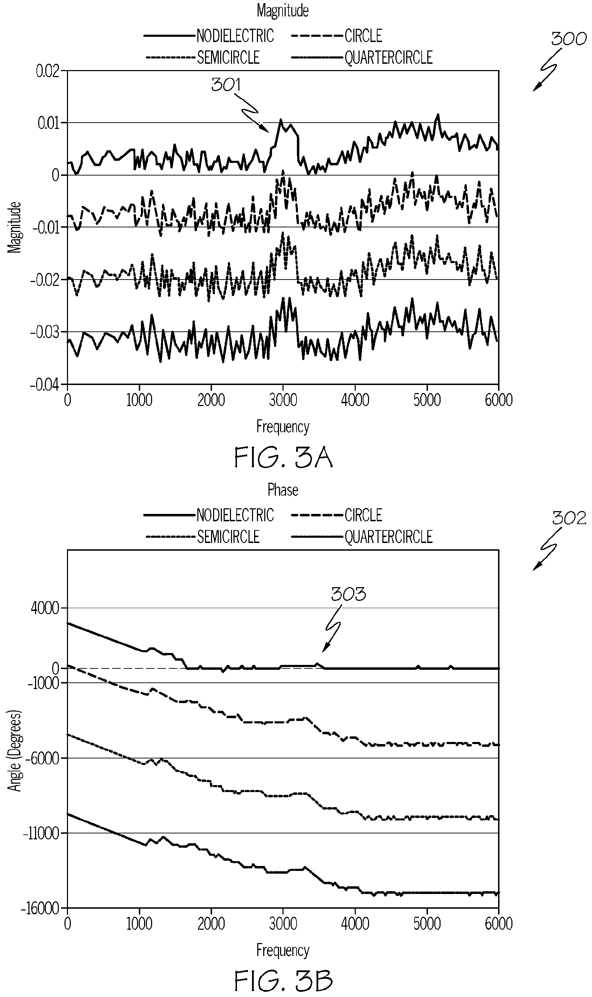

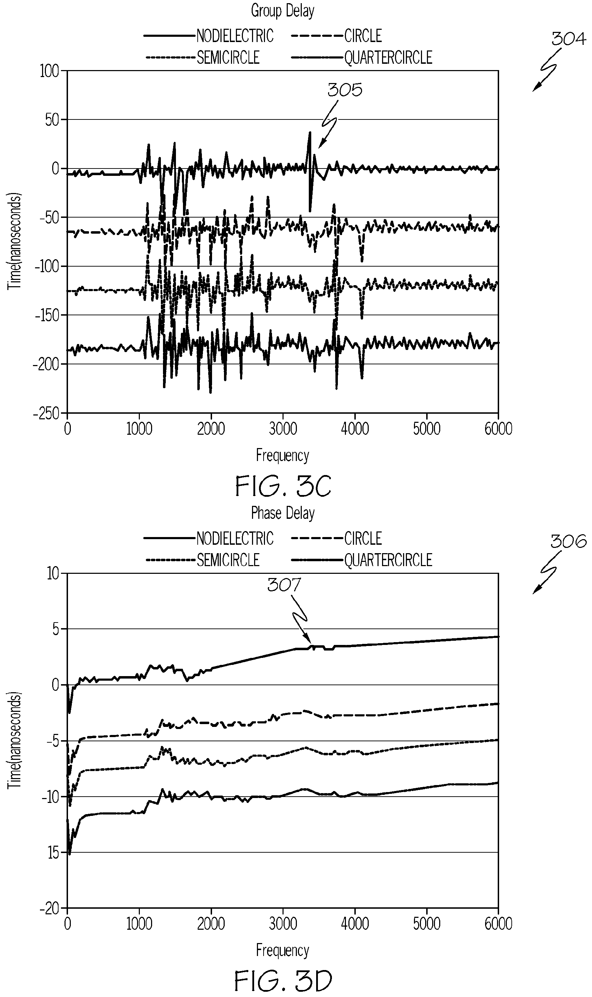

FIGS. 3A-3D depict components of vector responses generated by the first, second, third, and fourth passive identification tags 200, 206, 214, and 222 described herein with respect to FIGS. 2A-2D in response to a detection signal, according to an example embodiment. The depicted vector responses may have been generated in response to a continuous frequency detection signal from 0 GHz to 6 GHz.. 3A depicts a frequency domain plot 300 of amplitudes of tag responses generated by the first, second, third, and fourth passive identification tags 200, 206, 214, and 222. FIG. 3B depicts a frequency domain plot 302 of phases of tag responses generated by the first, second, third, and fourth passive identification tags 200, 206, 214, and 222. FIG. 3C depicts a frequency domain plot 304 of group delay components of tag responses generated by the first, second, third, and fourth passive identification tags 200, 206, 214, and 222. FIG. 3D depicts a frequency domain plot 306 of phase delay components of tag generated by the first, second, third, and fourth passive identification tags 200, 206, 214, and 222. Each of the curves in the frequency domain plots 300, 302, 304, and 306, from top down, represents a tag response generated by the first, second, third, and fourth passive identification tags 200, 206, 214, and 222, respectively. That is, the top curve in each of the frequency domain plots 300, 302, 304, and 306 represents a component of the tag response generated via the first passive identification tag 200, while the bottom curve in each of the frequency domain plots 300 302, 304, and 306 represents a component of the tag response generated via the fourth passive identification tag 222.

Various features of the vector responses of each of the first, second, third, and fourth passive identification tags 200, 206, 214, and 222 may be used to distinguish the tags from one another. For example, as depicted in FIG. 3A, a plurality of peaks 301 are included at approximately 3 GHz in each amplitude component. The plurality of amplitude components generated by each of the first, second, third, and fourth passive identification tags 200, 206, 214, and 222 follow a similar pattern, with each including one of the plurality of peaks 301 at approximately 3 GHz. As depicted in FIG. 3B, the phase components associated with the second, third, and fourth passive identification tags 206, 214, and 222 are shaped differently than the phase components associated with the first passive identification tag 200 (e.g., they lack a plateau between 2 GHz and 3 GHz). The phase components comprise a plurality of nulls 303 between 3 GHz and 4GHz (e.g., at approximately 3.3 GHz). In the plurality of nulls 303, the magnitude of the phase angle of each phase response dips to form a distinctive feature in the plurality of phase responses. As depicted in FIGS. 3C and 3D, the group delay and phase delay components also include plurality of nulls 305 and 307 at approximately 3.3 GHz.

Magnitudes of each of the components of the vector responses first, second, third, and fourth passive identification tags 200, 206, 214, and 222 at particular frequencies associated with common features may be used to distinguish the tags from one another. The example described herein with respect to FIGS. 2A-3D may provide an example as to how to select a particular set of frequencies at which to evaluate and distinguish vector responses of the passive identification tags described herein. For example, a baseline tag response (e.g., associated with a passive identification tag only including a resonant structure and not a characteristic layer, such as the first passive identification tag 200 depicted in FIG. 2A) associated with a particular resonant structure may be evaluated for signal features (e.g. peaks, nulls, local minima, local maxima, plateaus, averages over a particular set of frequencies, etc.). Additional tag responses associated with that resonant structure may be evaluated for the signal features identified in the baseline tag response. Amplitudes of the various components of the vector responses may then be determined and used to identify a particular tag response. For example, Table 1 below depicts the amplitudes of each component of the vector responses depicted in FIGS. 3A-3D (e.g., at the plurality of peaks 301 and the pluralities of nulls 303, 305, and 307).

**Table 1**

| | **First Passive Identific ation Tag 200** | **Second Passive Identific ation Tag 206** | **Third Passive Identific ation Tag 214** | **Fourth Passive Identific ation Tag 222** |
|---|---|---|---|---|
| **Amplitu de at 3 GHz Peak (au)** | 0.0107 | 0.0114 | 0.0129 | 0.0108 |
| **Phase at 3.3 GHz Null (degrees)** | 31.01 | 1652.42 | 1617.82 | 1472.82 |
| **Group Delav at 3.3 GHz Null (ns)** | 0.0198 | 3.77 | 4.154 | 1.59 |
| **Phase Delay at 3.3 GHz Null (ns)** | 3.23 | 2.68 | 2.34 | 2.20 |

The different values of each vector response for the above-described signal features are due to manipulation of the baseline response (represented by the values associated with the first passive identification tag 200) by the characteristic layers (e.g., the second, third, and fourth dielectric structures 212, 220, and 228) of the second, third, and fourth passive identification tags 206, 214, and 222. The values shown in Table 1 may comprise variables that are input into a tag identification function. The tag identification function may combine the values using a mathematical relation (e.g., a summation) to generate a tag identification value. The tag identification value may then be used (e.g., via a lookup table or other relational database) to identify each of the first, second, third, and fourth passive identification tags 200, 206, 214, and 222. It should be appreciated that portion of the plurality of components of the vector responses associated with the passive identification tags described herein may be used to identify the tags. Moreover, different portions (e.g., at different frequencies, or different ranges of frequencies) within each of the amplitude, phase, group delay, and phase delay components may be used in the process of identifying the passive identification tags described herein.

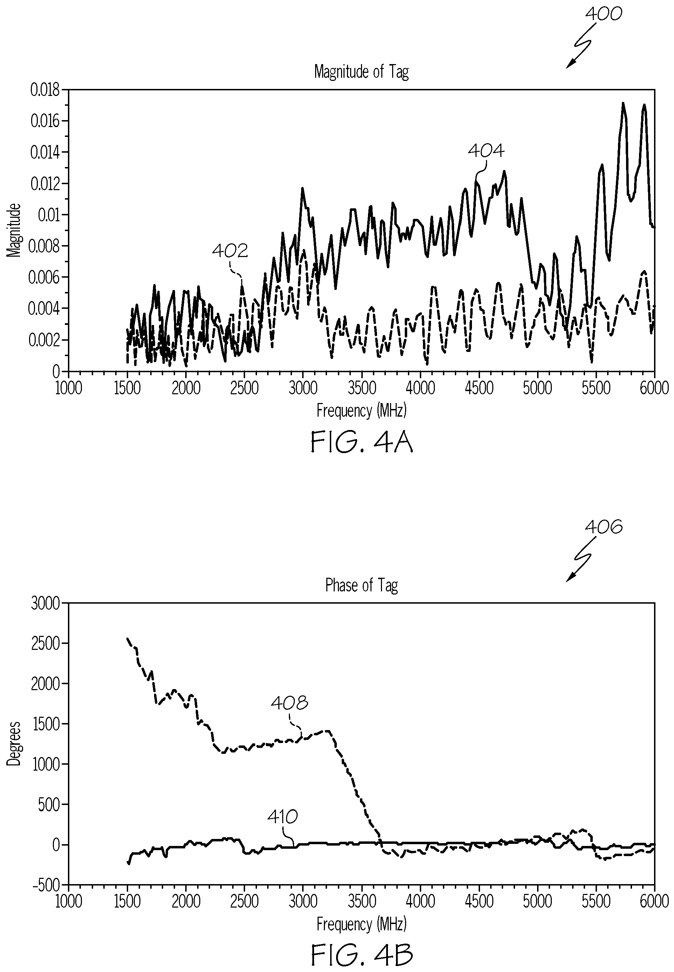

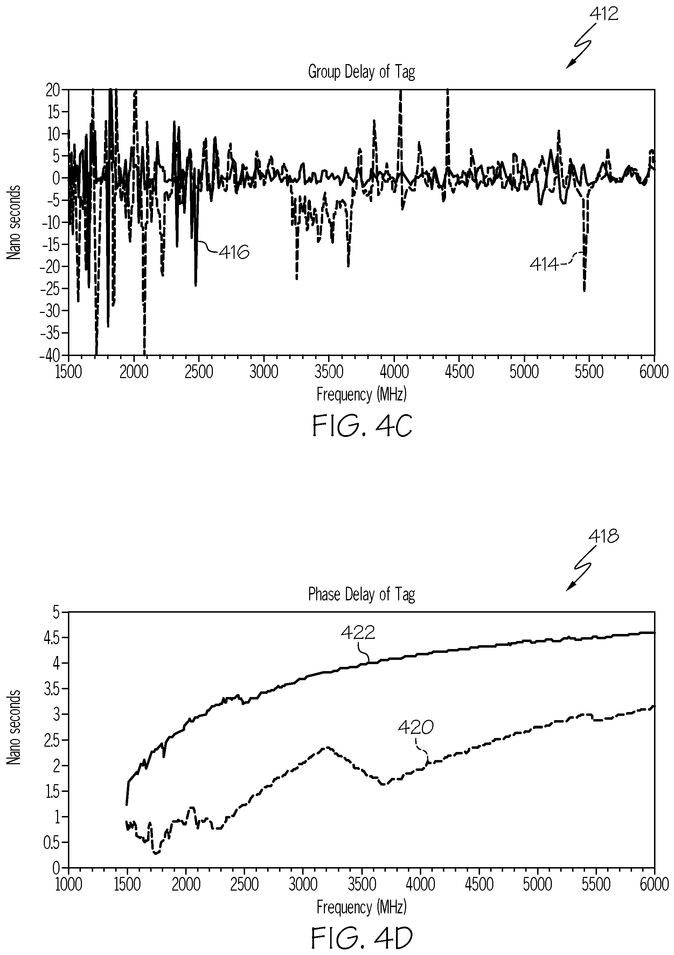

Referring now to FIGS. 4A-4D, the tag responses generated via passive identification tags described herein may vary as a function of the orientation. For example, the angle of incidence of a detection signal may effect one or more of an amplitude component, phase component, group delay component, and phase delay component of a tag response. FIGS. 4A-4D depict frequency plots 400, 406, 412, and 418 of amplitude, phase, group delay, and phase delay components of two tag responses generated by a single passive identification tag from different detection signals. The tag responses depicted in FIGS. 4A-4D were generated using the first passive identification tag 200 described herein with respect to FIG. 2A. For example, the frequency plot 400 of FIG. 4A depicts a first amplitude response 402 generated with a first detection signal that is incident on the passive identification tag at a 0 degree angle (e.g. normally incident on the tag) and a second amplitude response 402 generated with a second detection signal that is incident on the passive identification tag at a 90 degree angle (e.g., substantially parallel to the resonant structure of the tag). FIG. 4B depicts first and second phase components 408 and 410 generated from the first and second detection signals. FIG. 4C depicts first and second group delay components 414 and 416 generated from the first and second detection signals. FIG. 4D depicts first and second phase delay components 420 and 422 generated from the first and second detection signals.

As shown in FIGS. 4A-4D, the angle of incidence of the detection signal may significantly alter the features present in each component of a tag response. For example, as depicted in FIG. 4C, the second group delay component 416 is flatter in the frequency domain than the first group delay component 414. The detection signal being incident on the passive identification tag at an angle of incidence lying outside a particular range (e.g., less than or equal to 30°) may significantly alter the shape of the vector components. This may reduce the efficacy of the preceding identification method if using values associated with common features (e.g., at a particular frequency band) in the vector components of each tag response in the process of the identifying tags.

To counteract such tag response variability as a function of angle of incidence, the identification logic of the analysis system 116 (see FIG. 1A) described herein may include instruction sets for normalizing the tag responses using a reference response or reference point. In embodiments, such normalization may occur entirely in the computational domain. For example, the identification logic may include a response library having a plurality of previous responses measured via the receiving system 112 (see FIG. 1A). The analysis system 116 may normalize a measured tag response using a previously-stored tag response generated at a known reference orientation, for example. In embodiments, the tag identification logic may predict a tag response using the response library or a set of equations configured to predict the tag response (e.g., based on a known location or orientation of a transmitter) and use the predicted response to normalize a measured tag response.

In embodiments, normalizing a tag response is an active process performed via measurement of a reference response. For example, FIG. 5 schematically depicts a passive identification tag 500, according to an example embodiment. The passive identification tag 500 includes a substrate 502. In embodiments, the substrate 502 is similar in structure and function to the substrate 130 of the first passive identification tag 104a described herein with respect to FIGS. 1A and 1B. The passive identification tag 500 is depicted to include a resonant structure 504 and a dielectric structure 508 disposed thereon. As described herein, the resonant structure 504 may generate a baseline response from electromagnetic energy of a detection signal 512 that is incident thereon. The baseline response may be modified by the dielectric structure 508 to generate a tag response 516. Aspects of the tag response 516 may vary depending on the directionality (e.g., angle of incidence) of the detection signal 512 and other environmental factors (e.g., location of the passive identification tag 500, noise).

In view of the situational dependency of the tag response 516, the passive identification tag 500 may include a reference resonant structure 506. The reference resonant structure 506 may be uncovered by the dielectric structure 508 in some embodiments. While the reference resonant structure 506 and the resonant structure 504 are depicted to be incorporated on the same substrate 502, embodiments are envisioned where the resonant structure 504 and the reference resonant structure 506 are incorporated on different substrates (e.g., as components of different passive identification tags disposed on the same object). In embodiments, the reference resonant structure 506 includes a pattern of a suitable conductive material. In embodiments, the reference resonant structure 506 comprises the same pattern as the resonant structure 504 used to generate the tag response 516.

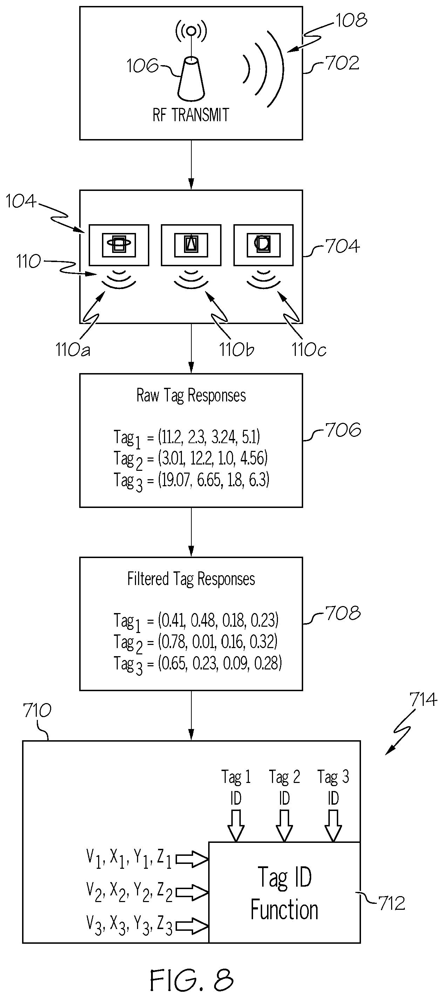

In embodiments, the reference resonant structure 506 is formed from the same layer of conductive material as the resonant structure 504 used to generate the tag response 516. The reference resonant structure 506 may generate a reference response 514 from the electromagnetic energy of the detection signal 812. The reference response 514 may be used in the process of detecting the tag response 516. For example, in embodiments, the receiving system 112 (see FIG. 1A) may include logic (e.g., stored in the memory 120 of the analysis system 116) to normalize the tag response 516 using the reference response 414. For example, the reference response 514 may include similar situational dependencies as the tag response 516, and so the reference response 514 may provide a reference point off of which to generate a normalized and/or filtered tag response (e.g., corresponding to one of the filtered tag responses depicted at block 706 of the process 700 described herein with respect to FIG. 8). By normalizing the tag response 516 using the reference response 514, situational dependencies may be accounted for in detection and identification of the passive identification tag 500, thereby facilitating accurate identification thereof.

Referring still to FIG. 5, the passive identification tag 500 is depicted to further include a sensor structure 510. The sensor structure 510 may include a structure of conductive leads and/or resistance structures disposed on the substrate 502 and connected to the resonant structure 504. In embodiments, the sensor structure 510 may provide a point of connection for an external sensor (e.g., a temperature sensor, a photodetector, a radiation detector, a moisture sensor, a chemical sensor). An external sensor may be conductively connected to the resonant structure 504 via the sensor structure 510. In embodiments, the sensor structure 510 may have a varied resistance or conductivity based on the readings of the external sensor to actively adjust the tag response 516 in response to changing external environmental conditions. Tamper sensors may also be connected to the passive identification tag 500 via the sensor structure 510 to determine metrics associated with an object to which the passive identification tag 500 is attached. As a result, the detection methods described herein may also be used to quantify aspects of the environment of the passive identification tag 500 and provide a means of conveying sensor measurements to separate computing systems.

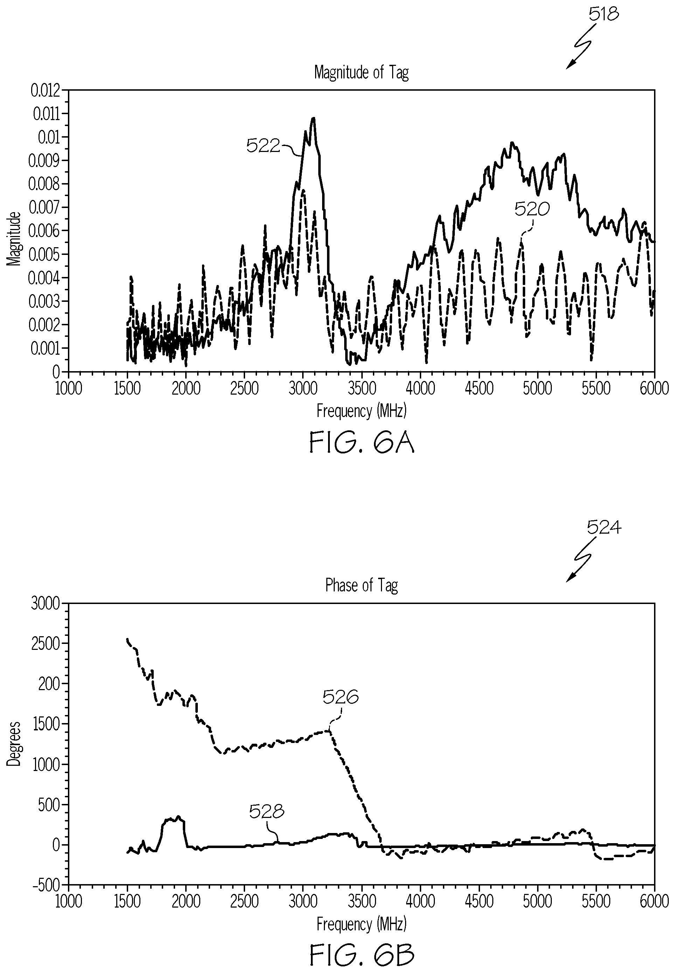

FIGS. 6A-6D depict frequency plots 518, 524, 530, and 536 of amplitude, phase, group delay, and phase delay components of two normalized tag responses generated by a single passive identification tag from different detection signals. The tag responses depicted in FIGS. 6A-6D were generated using the first passive identification tag 200 described herein with respect to FIG. 2A. The frequency plots 518, 524, 530, and 536 depicted in FIGS. 6A-6D are similar to those described herein with respect to FIGS. 4A-4D, with the exception that the frequency plots 518, 524, 530 and 536 depict tag responses that have been normalized using a reference tag response. Such a reference tag response may be generated by, for example, a reference resonant structure (e.g., similar in structure to the reference resonant structure 506 described herein with respect to FIG. 5) disposed at a similar orientation to the resonant structure used to generate the depicted tag response.

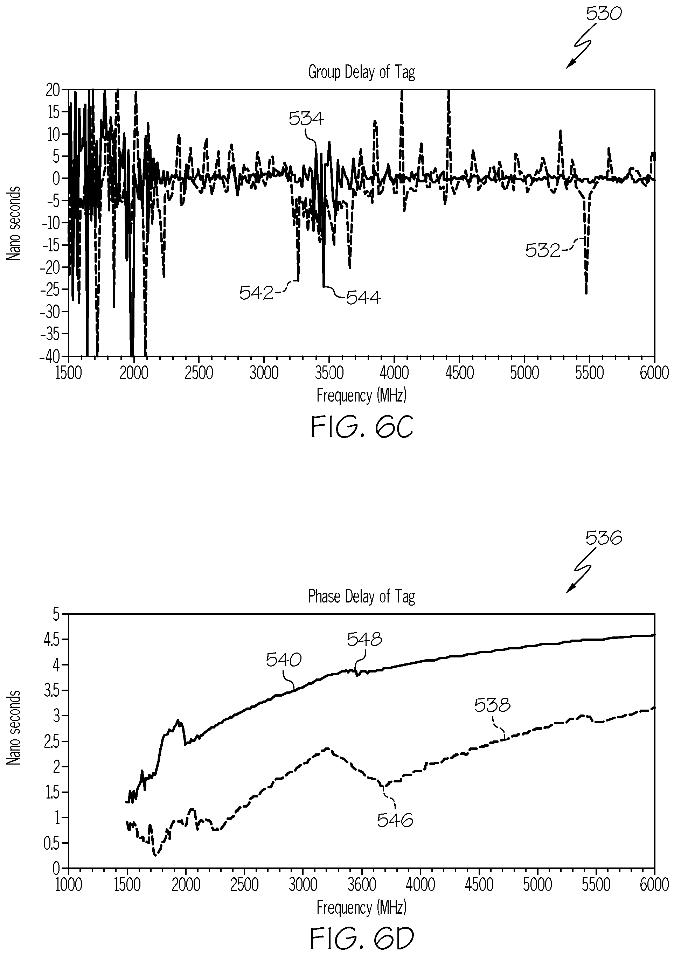

The frequency plot 518 of FIG. 6A depicts a first normalized amplitude response 520 generated with a first detection signal that is incident on the passive identification tag at a 0 degree angle (e.g. normally incident on the tag) and a second amplitude response 522 generated with a second detection signal that is incident on the passive identification tag at a 90 degree angle (e.g., substantially parallel to the resonant structure of the tag). FIG. 6B depicts first and second phase components 526 and 528 generated from the first and second detection signals. FIG. 6C depicts first and second group delay components 532 and 534 generated from the first and second detection signals. FIG. 6D depicts first and second phase delay components 538 and 540 generated from the first and second detection signals.

A comparison the of tag responses depicted in FIGS. 4A-4D with the normalized tag responses depicted in FIGS. 6A-6D reveals that the normalized tag responses are more effective at retaining signal features that may be used in the process of identifying the passive identification tags described herein. For example, with reference to FIG. 6C, the first group delay component 532 includes a dip 542 at approximately 3.3 GHz. The second group delay component 534 also includes a dip 544, at a slightly shifted frequency (at approximately 3.45 GHz). With reference to FIG. 6D, the first phase delay component 538 includes a dip 546 at approximately 5.46 GHz. The second phase delay component 540 also includes a dip 548, at a slightly shifted frequency (at approximately 3.5 GHz). This contrasts with the second group and phase delay components 416 and 422 depicted in FIGS 4C and 4D, where the directionality of the detection signal eliminated the dips, thus rendering identification of the tag more difficult. Accordingly, the identification process described herein with respect to FIGS. 3A-3D and Table 1 may be used to effectively identify the passive identification tag in this example based on the normalized tag responses, with the understanding that features may need to be evaluated using ranges of frequencies (to account for different angles of incidence of the detection signal) to ensure that values associated with desired signal features are being used in the identification process.

In embodiments, the passive identification tags described herein may be structured to reduce the sensitivity of the tag response to tag orientation. For example, certain passive identification tags may include structures therein (e.g., patch or micro-strip antennas, phased dielectric boundaries) to render the tag responses less sensitive to angles of incidence. For example, characteristic layers of the passive identification tags described herein may include patch antennas embedded therein that receive detection signals and generate a secondary detection signal therefrom that is incident on the resonant structure at the same angle of incidence irrespective of the directionality of the original detection signal.

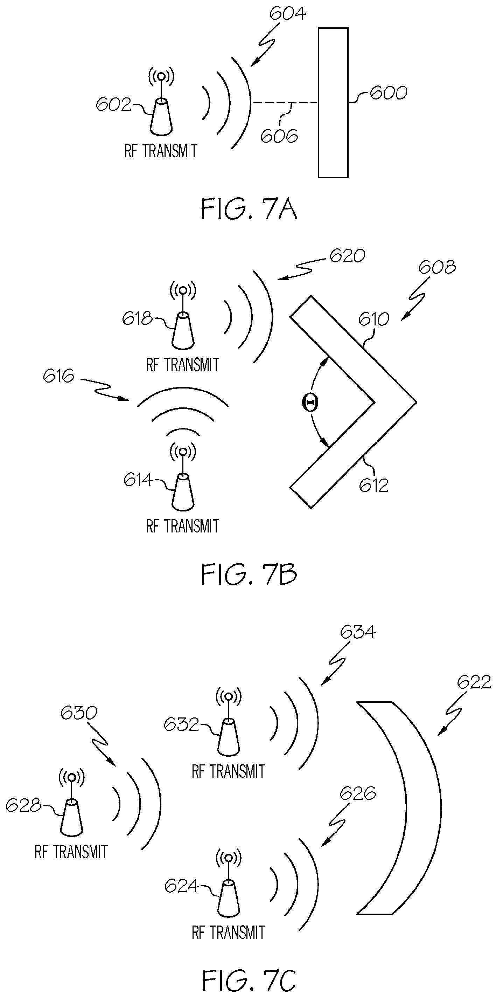

In embodiments, the passive identification tags described herein may be oriented in a particular manner to maximize a tag response. For example, FIG. 7A depicts a passive identification tag 600 that is oriented relative to a transmitter 602 such that a detection signal 604 propagating from the transmitter 602 is normally incident on a surface (e.g., of a resonant structure) of the passive identification tag 600. The detection signal 604 may propagate parallel to a surface normal 606 of the passive identification tag 600 to generate a tag response having a maximum amplitude. In embodiments, the orientation depicted in FIG. 7A is achieved by fixing the passive identification tag 600 at a particular location for identification relative to the transmitter 602 (e.g., objects may be placed at a particular location for identification). In embodiments, the orientation depicted in FIG. 7A is achieved by moving the transmitter 602 (e.g., the tag response may be detected as a function of transmitter location until a desired orientation is achieved).

In embodiments, the passive identification tags described herein may be non-planar in shape to facilitate generating detectable tag responses from a wide variety of orientations. For example, the substrate 130 of the first passive identification tag 104a described herein with respect to FIG. 1B may comprise a non-planar surface upon which the resonance layer 132 and the characteristic layer 134 are formed. FIG. 7B depicts a non-planar passive identification tag 608. The non-planar passive identification tag 608 includes a first portion 610 and a second portion 612 that extend at an angle Θ relative to one another. In embodiments, the first portion 610 and the second structure 612 are each separate passive identification tags (e.g., each including separate resonant and dielectric structures) formed on the same substrate. That is, the first portion 610 and the second portion 612 may be configured to generate equivalent tag responses when a detection signal is incident thereon from a particular direction.

As depicted in FIG. 7B, a first transmitter 614 may emit a first detection signal 616 that is normally incident (or within 30° of being normally incident) on the first portion 610 to generate a tag response. A second transmitter 618 may emit a second detection signal 620 that is normally incident (or within 30° of being normally incident) on the second portion 612 to generate a tag response. The first and second portions 610 and 612 thus extend the angular range for generation of an identifiable tag response (e.g., with or without normalization). Any number of such portions extending at any angle to one another (e.g., two passive identification tag portions may be disposed on opposite sides of a substrate) may be used to increase the flexibility of the passive identification tags described herein.

FIG. 7C depicts a curved passive identification tag 622. The curved passive identification tag 622 may include a non-planar curved substrate (e.g., having a concave or convex surface) having one or more resonant structures and one or more dielectric structures disposed thereon. The curved passive identification tag 622 beneficially ensures that detection signals from transmitters are incident thereon at a variety of angles of incidence to facilitate generating an identifiable tag response (with or without normalization). For example, FIG. 7C depicts a first transmitter 624 emitting a first detection signal 626, a second transmitter 628 emitting a second detection signal 630, and a third transmitter 632 emitting a third detection signal 634. Due to the curved or angled structure of the curved passive identification tag 622, despite the first, second, and third detection signals 626, 630, and 634 propagating towards the curved passive identification tag 622 in different directions, at least a portion of the curved passive identification tag 622 may receive any one of the first, second, and third detection signals 626, 630, and 634 at an angle of incidence generating a desired tag response. In embodiments, the curved passive identification tag 622 may include a plurality of different resonant structures and dielectric structures each covering different segments of curved substrate. In embodiments, the curved passive identification tag 622 may include a single resonant structure covering an entirety of a curved substrate.

FIG. 8 depicts a flow diagram of a process 700 for identifying a plurality of passive identification tags, according to an example embodiment. The process 700 may be performed via the identification system 100 described herein with respect to FIGS. 1A - 1G. Accordingly, reference will be made to various components of the identification system 100 to aid in the description of the process 700. The process 700 may be performed in contexts other than the identification system 100 described herein. Any environment including one or more passive identification tags is suitable for performance of the process 700 via suitable detection equipment (e.g., an RF transmitter and receiving system).

At block 702, the transmitter 106 generates a detection signal 108. The detection signal may be discrete or continuous frequency RF signal. In embodiments the detection signal 108 comprises an ambient network signal (e.g. a cellular network, Wi-Fi network, etc.). At block 704, the detection signal 108 interrogates the plurality of passive identification tags 104 to generate the plurality of tag responses 110. The detection signal 108 may propagate into the resonant structures 122 (see FIG. 1A) to generate baseline responses that are modified by dielectric structures (e.g., the first, second, and third dielectric structures 124, 126, and 128) of the plurality of passive identification tags 104 to generate the plurality of tag responses 110.

At block 708, the plurality of tag responses 708 are received by the receiving system 112. The detector 114, for example, may convert RF signals of the plurality of tag responses 110 to analog signals that are processed via the analysis system 116 to generate values for components (e.g., amplitude, phase, group delay, and phase delay) of the plurality of tag responses 110. At block 710, the analog signals are processed (e.g., via Fast Fourier Transform algorithms, noise filters, and the like) to generate a plurality of filtered tag responses. In embodiments, as described herein with respect to FIGS 5-6D, the analog signals are normalized using a reference response. The reference response may either be actively generated by the plurality of passive identification tags (e.g., via reference resonant structures disposed therein) or computationally (e.g., the analysis system 116 may numerically predict the plurality of tag responses 110 based on a library of equations or previous tag responses). As shown in FIG. 8, the filtered tag responses may include one or more values for an amplitude, phase, group delay, and a phase delay (e.g., associated with a particular frequency or resonance frequency of the resonant structure 122).

At block 710, the filtered tag responses are input to a tag identification function 712. The tag identification function 712 may combine the values contained in the filtered tag responses. For example, in embodiments, the tag identification function is a summation function that sums the amplitude, phase, group delay, and phase delay component values associated with a particular one of the plurality of tag responses. The summed values may magnitudes of the components of the vector responses associated at particular signal features (e.g., local maxima, local minima, peaks, nulls). For example, the summed values may correspond to magnitudes of the components at peaks of amplitude components and dips of the phase, group delay, and phase delay components, as described herein with respect to Table 1. Any equation may be used to combine the plurality of values in the filtered tag responses. For example, each of the values provided in Table 1 may be summed for each tag to generate identification values. The identification values may be cross-referenced with a lookup table (e.g., included in the memory 120 of the analysis system 116) providing a tag identifier that is displayed to a user. Each tag identifier may be associated with a range of values output from the tag identification function 712. This way, users are aware of the identification tags present and the associated objects.

In view of the foregoing, it should be understood that passive identification capable of generating uniquely identifiable tag responses have been shown and described. The passive identification tags described herein utilize resonant structures to generate baseline responses using solely electromagnetic energy from detection signals incident thereon. The baseline responses may be modified using distinctive dielectric structures to generate tag responses. The tag responses may be received and used to generate analog signals having a plurality of vector components. Features of each of the vector components may be identified and values for each vector components within each feature may be input to an identification function used to identify the passive identification tags. Accordingly, the dielectric structures provide a mechanism for generating unique tag responses without incorporating active components into the tag, thus facilitating a cost-effective implementation of an inventory management system.

As used herein, the term "about" means that amounts, sizes, formulations, parameters, and other quantities and characteristics are not and need not be exact, but may be approximate and/or larger or smaller, as desired, reflecting tolerances, conversion factors, rounding off, measurement error and the like, and other factors known to those of skill in the art. When the term "about" is used in describing a value or an end-point of a range, the specific value or end-point referred to is included. Whether or not a numerical value or end-point of a range in the specification recites "about," two embodiments are described: one modified by "about," and one not modified by "about." It will be further understood that the endpoints of each of the ranges are significant both in relation to the other endpoint, and independently of the other endpoint.

Directional terms as used herein - for example up, down, right, left, front, back, top, bottom - are made only with reference to the figures as drawn and are not intended to imply absolute orientation.

Unless otherwise expressly stated, it is in no way intended that any method set forth herein be construed as requiring that its steps be performed in a specific order, nor that with any apparatus specific orientations be required. Accordingly, where a method claim does not actually recite an order to be followed by its steps, or that any apparatus claim does not actually recite an order or orientation to individual components, or it is not otherwise specifically stated in the claims or description that the steps are to be limited to a specific order, or that a specific order or orientation to components of an apparatus is not recited, it is in no way intended that an order or orientation be inferred, in any respect. This holds for any possible non-express basis for interpretation, including: matters of logic with respect to arrangement of steps, operational flow, order of components, or orientation of components; plain meaning derived from grammatical organization or punctuation, and; the number or type of embodiments described in the specification.

As used herein, the singular forms "a," "an" and "the" include plural referents unless the context clearly dictates otherwise. Thus, for example, reference to "a" component includes aspects having two or more such components, unless the context clearly indicates otherwise.

It will be apparent to those skilled in the art that various modifications and variations can be made to the embodiments described herein without departing from the scope of the claimed subject matter as defined by the appended claims. Thus, it is intended that the specification cover the modifications and variations of the various embodiments described herein provided such modification and variations come within the scope of the appended claims.

## Claims

1. A passive identification tag (100) comprising:
a non-conductive substrate (130);
a resonant structure (122) disposed on the non-conductive substrate (130), the resonant structure (122) configured to generate a baseline response from a detection signal incident thereon; and
a characteristic layer (134) disposed on the non-conductive substrate (130) to modify at least one of an amplitude, phase, group delay, and phase delay of the baseline response to generate a tag response;
wherein the characteristic layer (134) comprises a dielectric structure (124) having a geometry that is structured to manipulate the baseline response;
**characterised in that** the passive identification tag (100) comprises
a reference resonant structure (506) configured to generate a reference response from the detection signal incident thereon for normalizing the tag response;
a protective structure (136) extending over the resonant structure (122), the reference resonant structure (506), and the characteristic layer (134).

2. The passive identification tag (100) of claim 1, wherein the resonant structure (122) is formed of a dielectric material, a conductive material, or a combination thereof.

3. The passive identification tag (100) of claim 2, wherein a dielectric constant of the characteristic layer or a conductivity of the resonant structure (122) determines the baseline response.

4. The passive identification tag (100) of any of claims 1-3, wherein the resonant structure (122) comprises a pattern of conductive material disposed on the non-conductive substrate (130).

5. The passive identification tag (100) of any of claims 1-4, wherein the characteristic layer (134) is formed of a combination of dielectric and conductive materials.

6. The passive identification tag (100) of claim 1, wherein the geometry forms at least one of a portion of a circle, a square, a dot, a teardrop, and a triangle section of dielectric material.

7. The passive identification tag (100) of any of claims 1-6, wherein the dielectric structure (124) manipulates the baseline response by at least one of detuning the baseline response, coupling the baseline response, and absorbing the baseline response.

8. The passive identification tag (100) of any of claims 1-7, wherein the dielectric structure (124) comprises a pattern of dielectric material that varies along three dimensions.

9. The passive identification tag (100) of claim 1, wherein the protective structure (136) comprises a layer of dielectric material that encapsulates the resonant structure (122) and the characteristic layer (134) and is configured to prevent one or more of oxidation, corrosion, and wear of the resonant structure (122) and characteristic layer (134).

10. The passive identification tag (100) of claim 9, wherein the protective structure (136) prevents the changes in material properties of the resonant structure (122) and the characteristic layer (134) when the passive identification tag (100) is exposed to contaminants from outside exposure.

11. The passive identification tag (100) of any of claims 1-10, wherein the passive identification tag (100) is planar in shape.

12. The passive identification tag (100) of any of claims 1-10, wherein the passive identification tag (100) is non-planar in shape in order to facilitate interrogation by a transmitter (106) from a variety of locations.

13. The passive identification tag (100) of any of claims 1-12, wherein the resonant structure (122) comprises a sensor portion (516) for attachment of an external sensor to the resonant structure (122).

14. The passive identification tag (100) of any of claims 1-13, wherein the resonant structure (122) comprises a plurality of resonant structures (122) that do not contact one another.

15. The passive identification tag (100) of claim 14, wherein the resonant structure (122) comprises a plurality of sensor portions (516) connected to each of the plurality of resonant structures (122) for attachment of one or more external sensors to the passive identification tag (100).

16. The passive identification tag (100) of any of claims 1-15, further comprising a patch antenna disposed on the non-conductive substrate (130), the patch antenna configured to generate a secondary detection signal from the detection signal that is used to generate the baseline response.

## Patentansprüche

1. Passiver Identifikations-Kennzeichner (100) mit:
einem nichtleitenden Substrat (130);
einer Resonanzstruktur (122), die auf dem nichtleitenden Substrat (130) angeordnet ist, wobei die Resonanzstruktur (122) so ausgestaltet ist, dass sie eine Basislinienantwort aus einem darauf einwirkenden Detektionssignal erzeugt; und
einer charakteristischen Schicht (134), die auf dem nichtleitenden Substrat (130) angeordnet ist, um mindestens eine der folgenden Eigenschaften der Basislinienantwort zu modifizieren: Amplitude, Phase, Gruppenlaufzeit und Phasenlaufzeit, um eine Kennzeichner-Antwort zu erzeugen;
wobei die charakteristische Schicht (134) eine dielektrische Struktur (124) mit einer Geometrie umfasst, die so strukturiert ist, dass sie die Basislinienantwort manipuliert; **dadurch gekennzeichnet, dass** der passive Identifikations-Kennzeichner (100) umfasst
eine Referenzresonanzstruktur (506), die so konfiguriert ist, dass sie aus dem auf sie einwirkenden Detektionssignal eine Referenzantwort erzeugt, um die Antwort des Kennzeichners zu normalisieren;
eine Schutzstruktur (136), die sich über die Resonanzstruktur (122), die Referenzresonanzstruktur (506) und die charakteristische Schicht (134) hinweg erstreckt.

2. Passiver Identifikations-Kennzeichner (100) nach Anspruch 1, wobei die Resonanzstruktur (122) aus einem dielektrischen Material, einem leitfähigen Material oder einer Kombination daraus gebildet ist.

3. Passiver Identifikations-Kennzeichner (100) nach Anspruch 2, wobei eine dielektrische Konstante der charakteristischen Schicht (134) oder eine Leitfähigkeit der Resonanzstruktur (122) die Basislinienantwort bestimmt.

4. Passiver Identifikations-Kennzeichner(100) nach einem der Ansprüche 1 bis 3, wobei die Resonanzstruktur (122) ein Muster aus leitfähigem Material umfasst, das auf dem nichtleitenden Substrat (130) angeordnet ist.

5. Der passive Identifikations-Kennzeichner (100) gemäß einem der Ansprüche 1 bis 4, wobei die charakteristische Schicht (134) aus einer Kombination dielektrischer und leitfähiger Materialien gebildet ist.

6. Passiver Identifikations-Kennzeichner (100) nach Anspruch 1, wobei die Geometrie einen Teil eines Kreises, eines Quadrats, eines Punktes, einer Tropfenform und/oder eines Dreiecks aus dielektrischem Material bildet.

7. Passiver Identifikations-Kennzeichner (100) gemäß einem der Ansprüche 1 bis 6, wobei die dielektrische Struktur (124) die Basislinienantwort durch mindestens eine der folgenden Maßnahmen manipuliert: Verstimmen der Basislinienantwort, Koppeln der Basislinienantwort und Absorbieren der Basislinienantwort.

8. Passiver Identifikations-Kennzeichner (100) gemäß einem der Ansprüche 1 bis 7, wobei die dielektrische Struktur (124) ein Muster aus dielektrischem Material umfasst, das sich entlang dreier Dimensionen verändert.

9. Passiver Identifikations-Kennzeichner (100) nach Anspruch 1, wobei die Schutzstruktur (136) eine Schicht aus dielektrischem Material umfasst, welche die Resonanzstruktur (122) und die charakteristische Schicht (134) umschließt und so konfiguriert ist, dass sie eine oder mehrere der folgenden Erscheinungen verhindert: Oxidation, Korrosion und Verschleiß der Resonanzstruktur (122) und der charakteristischen Schicht (134).

10. Passiver Identifikations-Kennzeichner (100) nach Anspruch 9, wobei die Schutzstruktur (136) die Veränderungen der Materialeigenschaften der Resonanzstruktur (122) und der charakteristischen Schicht (134) verhindert, wenn der passive Identifikationsanhänger (100) Verunreinigungen durch äußere Einflüsse ausgesetzt ist.

11. Passiver Identifikations-Kennzeichner (100) nach einem der Ansprüche 1 bis 10, wobei der passive Identifikations-Kennzeichner (100) eine ebene Form aufweist.

12. Passiver Identifikations-Kennzeichner (100) gemäß einem der Ansprüche 1 bis 10, wobei der passive Identifikations-Kennzeichner (100) eine nicht-planare Form aufweist, um die Abfrage durch einen Sender (106) aus verschiedenen Positionen zu erleichtern.

13. Passiver Identifikations-Kennzeichner (100) nach einem der Ansprüche 1 bis 12, wobei die Resonanzstruktur (122) einen Sensorabschnitt (516) zum Anbringen eines externen Sensors an der Resonanzstruktur (122) umfasst.

14. Passiver Identifikations-Kennzeichner (100) nach einem der Ansprüche 1 bis 13, wobei die Resonanzstruktur (122) eine Vielzahl von Resonanzstrukturen (122) umfasst, die sich nicht kontaktieren.

15. Passiver Identifikations-Kennzeichner (100) nach Anspruch 14, wobei die Resonanzstruktur (122) mehrere Sensorabschnitte (516) umfasst, die mit jeder der mehreren Resonanzstrukturen (122) verbunden sind, um einen oder mehrere externe Sensoren an dem passiven Identifikationsanhänger (100) anzubringen.

16. Passiver Identifikations-Kennzeichner (100) nach einem der Ansprüche 1 bis 15, der ferner eine auf dem nichtleitenden Substrat (130) angeordnete Patch-Antenne umfasst, wobei die Patch-Antenne so konfiguriert ist, dass sie aus dem Detektionssignal, das zur Erzeugung der Basislinienantwort verwendet wird, ein sekundäres Detektionssignal erzeugt.

## Revendications

1. Étiquette d'identification passive (100) comprenant :
un substrat non conducteur (130),
une structure résonante (122) disposée sur le substrat non conducteur (130), la structure résonante (122) étant conçue pour générer une réponse de base à partir d'un signal de détection incident sur celle-ci, et
une couche caractéristique (134) disposée sur le substrat non conducteur (130) pour modifier l'amplitude, la phase, le retard de groupe et/ou le retard de phase de la réponse de base pour générer une réponse d'étiquette ;
ladite couche caractéristique (134) comprenant une structure diélectrique (124) ayant une géométrie structurée pour manipuler la réponse de base ;
l'étiquette d'identification passive (100) étant **caractérisée en ce qu'**elle comprend :
une structure résonante de référence (506) conçue pour générer une réponse de référence à partir du signal de détection incident sur celle-ci pour normaliser la réponse de l'étiquette, et
une structure protectrice (136) s'étendant sur la structure résonante (122), la structure résonante de référence (506) et la couche caractéristique (134).

2. Étiquette d'identification passive (100) selon la revendication 1, dans laquelle la structure résonante (122) est formée d'un matériau diélectrique, d'un matériau conducteur ou d'une combinaison de ceux-ci.

3. Étiquette d'identification passive (100) selon la revendication 2, dans laquelle la constante diélectrique de la couche caractéristique ou la conductivité de la structure résonante (122) détermine la réponse de base.

4. Étiquette d'identification passive (100) selon l'une quelconque des revendications 1 à 3, dans laquelle la structure résonante (122) comprend un motif de matériau conducteur disposé sur le substrat non conducteur (130).

5. Étiquette d'identification passive (100) selon l'une quelconque des revendications 1 à 4, dans laquelle la couche caractéristique (134) est formée d'une combinaison de matériaux diélectriques et conducteurs.

6. Étiquette d'identification passive (100) selon la revendication 1, dans laquelle ladite géométrie forme une portion d'une section d'un cercle, d'un carré, d'un point, d'une goutte et/ou d'un triangle de matériau diélectrique.

7. Étiquette d'identification passive (100) selon l'une quelconque des revendications 1 à 6, dans laquelle la structure diélectrique (124) manipule la réponse de base par désaccord de la réponse de base, couplage de la réponse de base et/ou absorption de la réponse de base.

8. Étiquette d'identification passive (100) selon l'une quelconque des revendications 1 à 7, dans laquelle la structure diélectrique (124) comprend un motif de matériau diélectrique qui varie selon trois dimensions.

9. Étiquette d'identification passive (100) selon la revendication 1, dans laquelle la structure protectrice (136) comprend une couche de matériau diélectrique qui encapsule la structure résonante (122) et la couche caractéristique (134) et est conçue pour empêcher l'oxydation, la corrosion et/ou l'usure de la structure résonante (122) et de la couche caractéristique (134).

10. Étiquette d'identification passive (100) selon la revendication 9, dans laquelle la structure protectrice (136) empêche les changements de propriétés des matériaux de la structure résonante (122) et de la couche caractéristique (134) lorsque l'étiquette d'identification passive (100) est exposée à des contaminants par exposition extérieure.

11. Étiquette d'identification passive (100) selon l'une quelconque des revendications 1 à 10, ladite étiquette d'identification passive (100) étant de forme plane.

12. Étiquette d'identification passive (100) selon l'une quelconque des revendications 1 à 10, ladite étiquette d'identification passive (100) étant de forme non plane afin de faciliter son interrogation par un transmetteur (106) à partir d'une variété d'emplacements.

13. Étiquette d'identification passive (100) selon l'une quelconque des revendications 1 à 12, dans laquelle la structure résonante (122) comprend une portion pour capteur (516) permettant la fixation d'un capteur externe à la structure résonante (122).

14. Étiquette d'identification passive (100) selon l'une quelconque des revendications 1 à 13, dans laquelle la structure résonante (122) comprend une pluralité de structures résonantes (122) qui ne sont pas en contact les unes avec les autres.

15. Étiquette d'identification passive (100) selon la revendication 14, dans laquelle la structure résonante (122) comprend une pluralité de portions pour capteur (516) reliées à chacune des structures résonantes (122) et permettant la fixation d'un ou plusieurs capteurs externes à l'étiquette d'identification passive (100).

16. Étiquette d'identification passive (100) selon l'une quelconque des revendications 1 à 15, comprenant en outre une antenne patch placée sur le substrat non conducteur (130), l'antenne patch étant conçue pour générer un signal de détection secondaire à partir du signal de détection servant à générer la réponse de base.
